# EUROPÄISCHE PATENTSCHRIFT

(11) **EP 0 672 021 B1**
(45) Veröffentlichungstag und Bekanntmachung des Hinweises auf die Patenterteilung: **13.08.1997**
(21) Anmeldenummer: 94906814.2
(22) Anmeldetag: 25.02.1994
(51) Int. Cl.: C02F 1/48

(54) **VORRICHTUNG ZUR FLUIDAUFBEREITUNG**
FLUID TREATMENT DEVICE
DISPOSITIF DE TRAITEMENT DE FLUIDES

(30) Priorität: 04.10.1993 DE 9315673 U
(43) Veröffentlichungstag der Anmeldung: 20.09.1995
(73) Patentinhaber: COMPONENTS AVIATION ESTABLISHMENT, 9490 Vaduz (LI)
(72) Erfinder: KÄMPF, Roland, CH-8590 Amriswil (CH)
(86) Internationale Anmeldenummer: CH9400041
(87) Internationale Veröffentlichungsnummer: WO9509816

(56) Entgegenhaltungen:
- EP-A- 0 433 035
- EP-A- 0 544 395
- WO-A-85/03649
- WO-A-92/10430
- WO-A-93/09868
- GB-A- 2 255 293
- US-A- 4 367 143
- US-A- 5 024 271

## Beschreibung

Die Erfindung betrifft eine Vorrichtung, insbesondere zur magnetischen Fluidaufbereitung, mit zumindest einem mehrteiligen Gehäuse, welches auf einem Trägerkörper montierbar ist und sich zumindest teilweise um den Außenumfang des Trägerkörpers erstreckt und mindestens einen Permanentmagneten aufweist.

Bei einer Relativbewegung von Fluidmolekülen in einem Magnetfeld wirken auf die in dem Fluid enthaltenen Dipole, auf die von Hydrathüllen umgebenden Ionen oder auf sonstige Ladungsträger und polarisierbare Moleküle Kräfte ein, welche zu einer Relativbewegung dieser magnetisch beeinflußbaren Bestandteile gegenüber den magnetisch nicht oder nur wenig beeinflußbaren Anteil des Fluids innerhalb des strömenden Fluids führen. Als Folge dieser fluidinternen Entmischungsvorgänge und Konzentrationsänderungen bei den verschiedenen Fluidladungsträgern ergeben sich veränderte physikalischechemische Eigenschaften der Fluide, insbesondere ein zeitlich begrenztes verändertes Kristallisationsverhalten von Kalzium-Salzen. Die Beeinflußung verschiedener Fluide durch Magnetfelder, insbesondere bei Einwirkung mehrerer Magnetpole auf strömende Moleküle von Fluiden ist bekannt, wobei in der Regel einteilige Gehäuse verwendet werden, welche die Fluidbewegung relativ zu ruhenden, ortsfesten Permanentmagneten ausnutzen. Zur Steigerung der Wirkung können ggfs. mehrere Gehäuse auf einem Rohr befestigt sein, wobei das Gehäuse fest verschlossen ist und eine nachträgliche Änderung der magnetischen Beeinflußung praktisch nicht oder nur sehr schwer durchführbar ist, weil das Gehäuse für eine bestimmte einmal festgelegte Magnetanordnung, Baulänge und Konstruktion vorgesehen ist und als geschlossenes Gerät von den Herstellern geliefert wird. Die Verbindungslinie der Magnetpole der verwendeten Permanentmagnete liegt im allgemeinen in einer Ebene senkrecht zur Rohrachse. Die Einflußnahme derartiger Aufbereitungsgeräte auf sämtliche magnetisch beeinflußbaren Fluide ist daher sehr begrenzt ist.

Aus dem Gebrauchsmuster G 91 02 938.4 ist ein Gerät zur magnetischen Fluidbeeinflußung bekannt, welches ein zweiteiliges Gehäuse aufweist und die nachträgliche Montage an einer vorhandenen Rohrleitung oder einem Kanalabschnitt mit geringem Aufwand ermöglicht. Die Gehäusehälften sind zur Aufnahme eines oder mehrerer Magnete gleicher Form und Baugröße vorgesehen, so daß immer nur dann in einem begrenzten Maße auf die Fluidzusammensetzung Einfluß genommen werden kann, wenn durch die vorgebene Bauweise der Rohrleitung die Anordnung einer Vielzahl von Einzelgehäusen unmittelbar hintereinander nicht möglich ist.

Aus dem US-Patent 4,367,143 ist ferner ein Gerät zur magnetischen Fluidbeeinflußung bekannt, welches aus einzelnen Stabmagneten besteht, die jeweils in einem Gehäuse befestigt sind und die einzelnen Gehäuseschalen mit den Stabmagneten durch verschraubbare Klemmbügel umfangsverteilt um einen Trägerkörper herum befestigt werden.

Ferner sind elektrostatische oder elektromagnetische Fluidaufbereiter bekannt, welche sich in weiten Grenzen über die Regelung der angelegten Spannung, der Impulsstärke und Impulsfrequenz oder des Stromflusses an verschiedene Fluidzusammensetzungen anpassen lassen und infolge ihrer Verstellbarkeit einen großen Wirksamkeitsbereich aufweisen. Nachteilig wirkt sich aus, daß zur notwendigen Regelung ein hoher technischer Aufwand erforderlich ist, abgesehen davon, daß eine ständige Stromversorgung und Wartung erforderlich ist und eventuelle Störungen in der Regelung nicht zu vernachlässigen sind.

Der Erfindung liegt daher die Aufgabe zugrunde, eine Vorrichtung aufzuzeigen, welche eine wartungsfreundliche und optimale Anpassung des Magnetfeldes auf die bestehende Fluidzusammensetzung in weiten Grenzen mit nur geringen Aufwand ermöglicht.

Erfindungsgemäß ist zur Lösung der Aufgabe vorgesehen, daß das Gehäuse zur Aufnahme mindestens eines Adapterelementes ausgebildet ist, welches jeweils mit einer frei wählbaren Anzahl und Anordnung von Permanentmagneten in Axial- und/oder Umfangsrichtung des Trägerkörpers bestückt ist, wobei die Permanentmagnete innerhalb des Gehäuses zueinander dreh-und ortsfest gehalten sind.

Hierdurch kann in Abhängigkeit der Fluidzusammensetzung eine Anzahl von Magneten ausgewählt und in ein Gehäuse eingesetzt werden, welches auf einem Trägerkörper montiert werden kann und zu einem Baukastensystem, bestehend aus dem Gehäuse und einer großen Zahl unterschiedlicher Permanentmagneten sowie entsprechender Befestigungsmittel, gehört. Durch die Auswahl der entsprechenden Permanentmagnete des Baukastensystems kann die Beeinflußung des Fluids hierbei individuell an die verschiedenen Wassersorten, Wirksamkeitsanforderungen, Kunden- und Installationsanforderungen angepaßt werden, wobei die Adapterelemente zur Aufnahme von Permanentmagneten mit gleicher und/oder unterschiedlicher Baugröße vorgesehen ist, welche hinsichtlich des Magnetmaterials, der Pollage, der Polorientierung und Polzahl pro Magnet beliebig auswählbar und nachträglich veränderbar sind.

Zur weiteren Erhöhung der Magnetfeldwirkung ist vorgesehen, daß mehrere Gehäuse hintereinander auf dem Trägerkörper angeordnet sind, wobei die Gehäuse untereinander mit gleichen oder unterschiedlichen Permanentmagneten bestückt sein können.

Zur Einhaltung einer bestimmten axialen und ggfs. angularen Position auf dem Trägerkörper ist vorgesehen, daß die Gehäuse auf dem Trägerkörper ortsfest, aber verdrehbar oder orts- und drehfest angeordnet sind, wobei bei der zweiten Alternative die Gehäuse an den stirnseitigen Flächen untereinander drehfest, beispielsweise durch Nut-Feder- oder Vorsprung-Rücksprung-Kombinationen, gehalten sein können.

Zur schnellen Montage und Demontage der Vorrichtung an bestehenden Rohrleitungen ist vorgesehen, daß die Gehäuse auf dem Trägerkörper durch Rohrabschnitte, Abstandsbolzen, welche in Bohrungen oder Ausschnitte der Gehäuse eingreifen oder durch Muffen mit ausreichend großem Außendurchmesser axial befestigt sind oder daß der Trägerkörper zur genauen Positionierung des Gehäuses in Abschnitte, beispielsweise durch Ringe, Rohr- oder Rohrhälftenabschnitte unterteilt ist, welche über eine Preßpassung, durch Aufschweißen, Kleben, Löten, Feststellschrauben oder Federn mit dem Trägerkörper verbunden sind, wobei die Ringe, Rohr- oder Rohrhälftenabschnitte einen oder mehrere hakenförmige Anschlüsse aufweisen können, welche auf beiden Seiten in das oder die Gehäuse eingreifen und zu einem sicheren Halt der Kassetten auf dem Trägerkörper führen sowie die gegenseitige Verdrehung der Gehäuse relativ zueinander verhindern.

In weiterer Ausgestaltung der Erfindung ist vorgesehen, daß der Trägerkörper ein Rohr oder ein Kanal eines Leitungssystems ist, auf dem das Gehäuse montiert wird.

In besonderer Ausgestaltung der Erfindung ist vorgesehen, daß der Trägerkörper ein Bestandteil der Vorrichtung ist und quasi als Zwischenstück in ein bestehendes Rohrsystem eingesetzt werden kann, wobei der Trägerkörper den Fluidstrom in mehrere, insbesondere zwei Teilströme, aufteilen kann und wobei mehrere Gehäuse hinterenander auf dem Trägerkörper in einem oder mehreren Teilströmen angeordnet sein können. In dieser erfindungsgemäßen Konstruktion wird die Tatsache berücksichtigt, daß Permanentmagnete nur eine begrenzte Tiefenwirkung besitzen, so daß durch eine Aufteilung des Fluids und eine Verringerung des jeweiligen Strömungsquerschnittes ein höherer Anteil an Fluid aufbereitet bzw. magnetisch beeinflußt werden kann, so daß eine verbesserte Gesamtwirkung erzielt wird. Außerdem kann durch diese Aufteilung des Fluidstromes eine höhere Anzahl von Permanentmagneten bei gleicher Baulänge eingesetzt werden,

Um eine Verringerung der Magnetfeldwirkung auszuschliessen, ist vorgesehen, daß der Trägerkörper aus einem nicht-magnetischen Werkstoff, beispielsweise aus Messing, Kupfer oder Edelstahl, insbesondere aus einem im Lebensmittelbereich einsetzbaren, beständigen Kunststoff hergestellt ist.

Um eine Verbindung mit allen gängigen Rohranschlüssen zu ermöglichen, ist vorgesehen, daß die Trägerkörper zumindest im Bereich der Aufnahme der Gehäuse gerade ausgeführt und an den Enden mit geraden oder gebogenen herkömmlichen Anschlußelementen, beispielsweise Flansch-, Verschraubungs- oder Lötanschlüssen ausgestattet oder unter Verwendung von Überwurfmuttern, Verschraubungen oder Klammerflanschverbindungen verbindbar sind.

Um eine nachträgliche Montage der Gehäuse an einem bereits fertiggestellten Rohr- oder Kanalsystem zu ermöglichen, ist vorgesehen, daß das Gehäuse aus mindestens einer zweiteiligen Kassette mit einer Aussparung für den Trägerkörper besteht, wobei eine Kassette mit einer Abdeckplatte versehen ist oder jeweils zwei Kassetten miteinander kombiniert sind, so daß der Trägerkörper zwischen den Kassetten oder einer Kassette und der Abdeckplatte eingeklemmt ist, wobei die Kassetten eine dem Durchmesser des Trägerkörpers entsprechende Aussparung aufweisen.

In weiterer Ausgestaltung der Erfindung ist vorgesehen, daß das Gehäuse, bestehend aus einer zweiteiligen Kassette, eine unterschiedliche Länge und eine Grundform mit einem runden, ovalen oder eckigen, insbesondere 4-, 8- oder mehreckigen Querschnitt bei zwei gegenüberliegenden Kassetten aufweist. Zur kostengünstigen Lagerung mit wenigen Einzelteilen ist vorgesehen, daß die Kassetten nahezu spiegelsymmetrisch aufgebaut sind und daß die Kassetten durch Haken, welche in eine korrespondierende Nut der gegenüberliegenden Kassette einrasten, gehalten sind oder daß zur Verbindung der beiden Kassetten eine Schraub-, Niet-, Klammer-, Klebe-, Bandagen- oder Schweißverbindung vorgesehen ist.

Um eine individuelle Anpassung der Vorrichtung an ein Fluid zu gewährleisten, ist vorgesehen, daß zur Erzeugung des Magnetfeldes Permanentmagnete mit variabler Größe hinsichtlich des Durchmessers oder der Länge und Breite sowie der Höhe in Block-, Stab-, Scheiben- oder Stangenform vorgesehen sind, wobei die Permanentmagnete aus Schwachmagneten oder aus Höchstleistungsmagneten bestehen und eine unterschiedliche Polstärke, Polstruktur, d.h. Polzahl, Polgröße und Pollage an den Außenflächen aufweisen.

Um einen möglichst geringen Abstand zwischen Trägerkörper und Permanentmagnete einzuhalten, ist vorgesehen, daß die Permanentmagnete gekrümmte Polflächen auf der dem Trägerkörper zugewandten Seite aufweisen können.

Die Mittel zur Befestigung der Permanentmagnete bestehen im einfachsten Fall aus beispielsweise Nuten, Bohrungen oder Aussparungen mit runder, eckiger oder länglicher Form, welche unmittelbar im Gehäuse eingelassen sind und in die die Permanentmagnete eingeklemmt werden können.

In besonderer Ausgestaltung der Erfindung ist jedoch vorgesehen, daß die Permanentmagnete im Gehäuse mittelbar durch mindestens ein Adapterelement gehalten sind, welches Nuten, Bohrungen oder Aussparungen zur Aufnahme der Permanentmagnete aufweist und daß das Adapterelement in Nuten, Bohrungen oder Aussparungen des Gehäuses bzw. den Kassetten, insbesondere einklemmbar, aufgenommen ist oder anderweitig mit dem Gehäuse, beispielsweise verklebt, verbunden ist. Hierdurch kann beispielsweise eine Gehäuseform mit einer zweiteiligen Kassette ausgewählt werden, wobei durch nachträgliche Anbringung von Adapterelementen ein Tiefenausgleich für unterschiedliche Rohrdurchmesser vorgenommen werden kann, so daß die Permanentmagnete immer einen sehr geringen Abstand zum Trägerkörper aufweisen. Ferner kann für jeden unterschiedlichen Magneten ein Adapter vorgesehen sein, so daß nach der entsprechenden Magnetauswahl der Permanentmagnet mit dem zugehörigen Adapter in der Kassette nur noch eingeklemmt zu werden braucht und eine schnelle Montage möglich ist.

In weiterer Ausgestaltung der Adapterelemente ist vorgesehen, daß die Adapterelemente zumindest zweiteilig aufgebaut sind, mit einem Magnetträger zur Aufnahme der Permanentmagnete und einem Orientierungshalter zur drehfesten Positionierung des Magnetträgers in den Kassetten des Gehäuses, wobei ggfs. der Magnetträger zweiteilig aufgebaut sein kann, mit einem ersten Teil, welches die Nuten, Bohrungen oder Aussparungen zur Aufnahme der Permanentmagnete aufweist und einem zweiten Teil, welches eine Planfläche zum Aufkleben des ersten Teils und zwei Stege zum Tiefenausgleich zwischen Gehäuse und Trägerkörper aufweist, so daß eine einfache und maschinelle Befestigung der Magnete in den Adapterelementen möglich ist. Besonders vorteilhaft kann es sein, wenn das zweite Teil und der Orientierungshalter einstückig ausgebildet sind, so daß der Magnetträger auf dem Orientierungshalter aufgeklebt werden kann.

In weiterer Ausgestaltung der Adapterelemente ist vorgesehen, daß der Orientierungshalter aus einem halbkreisförmigen Segment besteht, welcher mehrere, insbesondere drei, Magnetträger mit Permanentmagneten, vorzugsweise um jeweils 45 Grad, gegeneinander verdreht in einer drehfesten Position innerhalb einer Kassette hält. Das Segment kann in den entsprechenden Ausnehmungen der Kassetten eingeklemmt werden und trägt in exakt festgelegten angularen Positionen, beispielsweise mit einem Winkelabstand von 45 Grad, zum Beispiel drei Magnetträger mit einer gleichen oder unterschiedlichen Anzahl von Permanentmagneten, wobei in Verbindung mit einer drehfesten Zuordnung mehrerer Kassetten bzw. Gehäusen eine axiale und angulare Position jedes einzelnen Magneten festgelegt ist, so daß sich entlang des Trägerkörpers ein genau definiertes Positionsmuster ergibt, welches unabsichtlich nicht mehr verändert werden kann. Bei der Verwendung zweier Kassetten mit jeweils einem Segment ergeben sich in einem geschlossenen Gehäuse sechs mögliche Magnetträgeranordnungen mit einem Winkelabstand von 45 Grad in einer Kassette und einem Winkelabstand von 90 Grad zwischen zwei Kassetten, wobei ggfs. mittels eines Überbrückungsadapters zwei weitere Positionen für Magnetträger in der Berührungsebene der beiden Kassetten möglich ist, so daß im Querschnitt gesehen über den gesamten Umfang des Trägerkörpers Magnetträger in einem Winkelabstand von 45 Grad angeordnet sind.

Die Permanentmagnete werden vorteilhaft durch Klemm- oder Druckkräfte in den Kassetten oder Magnetträgern gehalten, können jedoch ohne weiteres auch durch anderweitige Befestigungsmöglichkeiten, beispielsweise eine Klebung, gehalten werden, wobei die Permanentmagnete mit ihren Polen einen Abstand von wenigen Millimetern oder keinen Abstand zum Trägerkörper aufweisen.

Eine Bestückung der Magnetträger, welche vorteilhaft in Längsrichtung des Trägerkörpers angeordnet sind, erfolgt nach Bedarf vollständig oder nur teilweise oder bei zwei Magnetträgern wechselweise bzw. bei mehreren Magnetträgern alternierend.

Die Erfindung wird im weiteren anhand der Figuren näher erläutert.

Es zeigt
- Fig.1: eine Seitenansicht zweier gegenüberliegender Kassetten,
- Fig.2: eine Seitenansicht gemäß Figur 1 mit Verriegelungsmöglichkeit,
- Fig.3: eine geschnittene Seitenansicht zweier Orientierungshalter mit einem Magnetträger,
- Fig.4: eine geschnittene Seitenansicht zweier Kassetten mit Orientierungshalter und Magnetträgern,
- Fig.5: drei geschnittene Ansichten zweier Halbschalen mit Orientierungshalter und Magnetträgern,
- Fig.6: vier geschnittene Seitenansichten gemäß Figur 4 mit unterschiedlicher Bestückung der Orientierungshalter,
- Fig.7: vier weitere geschnittene Seitenansichten gemäß Figur 6,
- Fig.8: drei weitere geschnittene Seitenansichten gemäß Figur 6,
- Fig.9: eine geschnittene Längsansicht einer Kassette mit einer Bestückung gemäß Figur 8,
- Fig.10: eine weitere geschnittene Längsansicht einer Kassette mit vollständiger Bestückung,
- Fig.11: eine weitere geschnittene Längsansicht einer Kassette mit vollständiger Bestückung,
- Fig.12: eine Auswahl von verwendbaren Permanentmagneten,
- Fig.13: mehrere Ansichten eines Magnetträgers für einen Stabmagneten,
- Fig.14: mehrere Ansichten eines Magnetträgers für runde Magneten mit teilweiser Bestückung,
- Fig.15: mehrere Ansichten eines weiteren Magnetträgers gemäß Figur 14,
- Fig.16: zwei Ansichten eines Abstandhalters für die Kassetten,
- Fig.17: drei Ansichten eines Abstandhalters und zwei Ansichten des Gehäuses mit Abstandhalter,
- Fig.18: mehrere Anordnungen von Gehäusen auf einem Trägerkörper,
- Fig.19: weitere Anordnungen von Gehäusen auf einem Trägerkörper,
- Fig.20: mehrere Anordnungen von Kassetten mit einer Abdeckplatte auf einem Trägerkörper,
- Fig.21: eine geschnittene Seitenansicht eines Trägerkörpers mit einer Aufteilung in zwei Teilströme und jeweils zwei nebeneinanderliegenden Gehäusen,
- Fig.22: eine geschnittene Seitenansicht gemäß Figur 21 mit jeweils drei nebeneinanderliegenden Gehäusen und
- Fig.23: eine geschnittene Seitenansicht gemäß Figur 21 mit jeweils drei nebeneinanderliegenden Gehäusen und einer alternativen Form des Trägerkörpers.

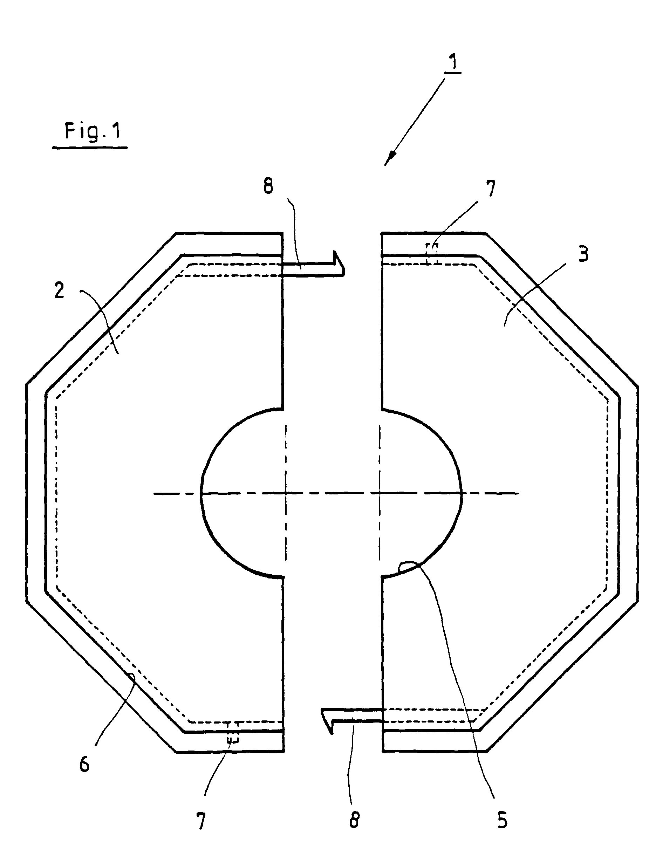

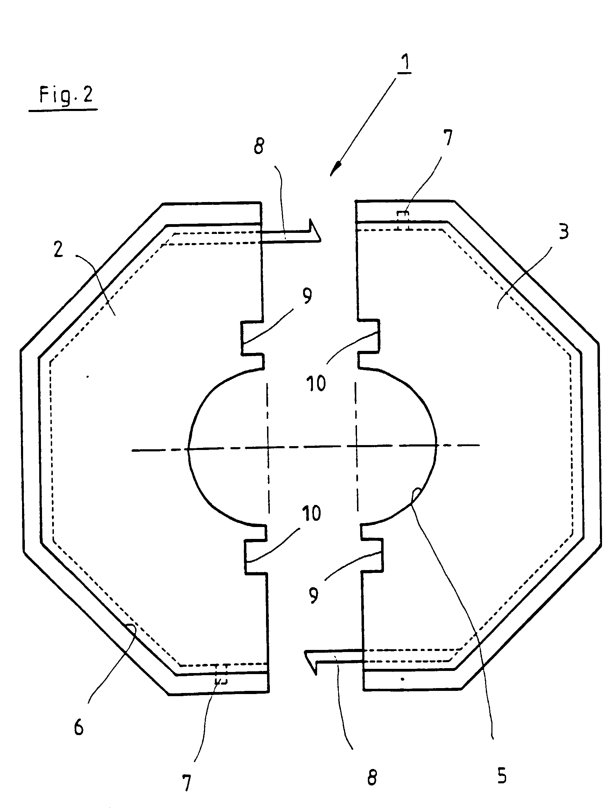

Figur 1 und 2 zeigt eine Seitenansicht eines Gehäuses 1 mit zwei gegenüberliegenden Kassetten 2, 3, welche jeweils aus einem spiegelsymmetrischen länglichen Grundkörper mit vier umfangsverteilten Kanten und einer offenen Seite 4 bestehen, so daß nach dem Zusammenfügen der beiden Kassetten 2, 3 ein geschlossenes Gehäuse 1 mit einem achteckigen Querschnitt und zweier geschlossener Stirnflächen entsteht. Die achteckige Querschnittsform des Gehäuses 1 ist jedoch nicht zwingend vorgeschrieben, sondern es kann jede beliebige andere Querschnittsform, beispielsweise eine runde Form gewählt werden. In der Mitte des Grundkörpers 1 befindet sich eine Aussparung 5, die sich jeweils zur Hälfte in die beiden Kassetten 2, 3 erstreckt und zur Aufnahme des in dieser Figur nicht dargestellten Trägerkörpers vorgesehen ist. Die beiden Kassetten 2, 3 sind von der offenen Seite 4 her frei zugänglich und zur Aufnahme der Magnete mit entsprechenden Adapterelementen vorgesehen. Zur Montageerleichterung weisen die beiden Kassetten 2, 3 auf der Innenseite 6 eine axiale Nut 7 auf, in der ein aus der Fläche 4 der Kassette 2, 3 hervorstehender Haken 8 eingreifen kann und die beiden Kassetten 2, 3 untereinander lösbar verriegelt. so daß keine weiteren Werkzeuge zur Montage bzw. Demontage erforderlich sind. Denkbar ist jedoch auch, daß die beiden Kassetten 2, 3 auf eine andere Art miteinander, beispielsweise durch eine Verschraubung oder dergleichen, verbunden werden.

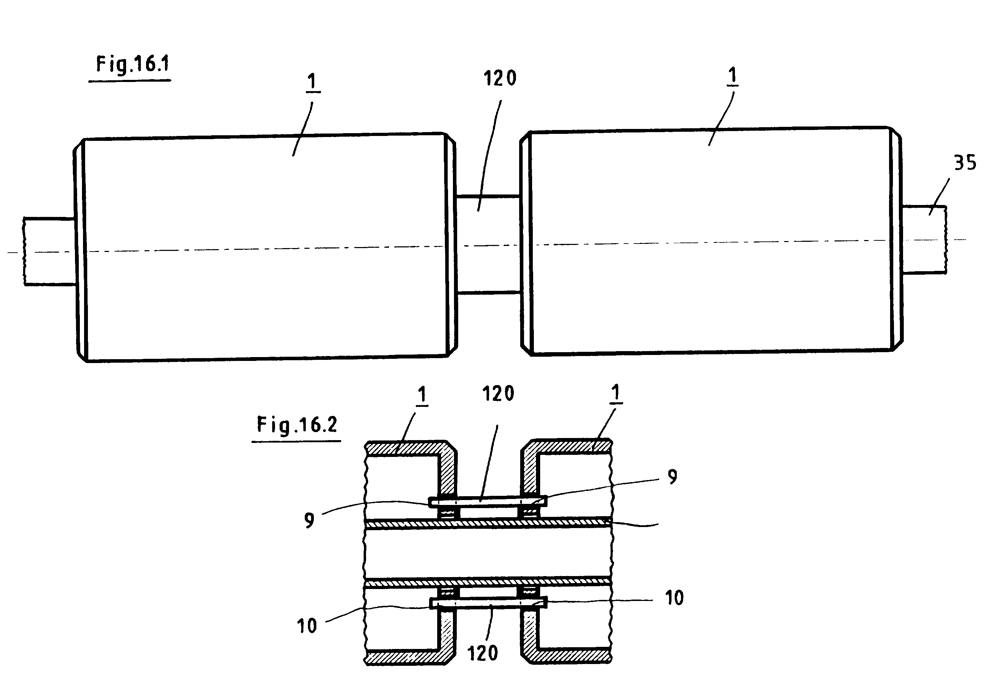

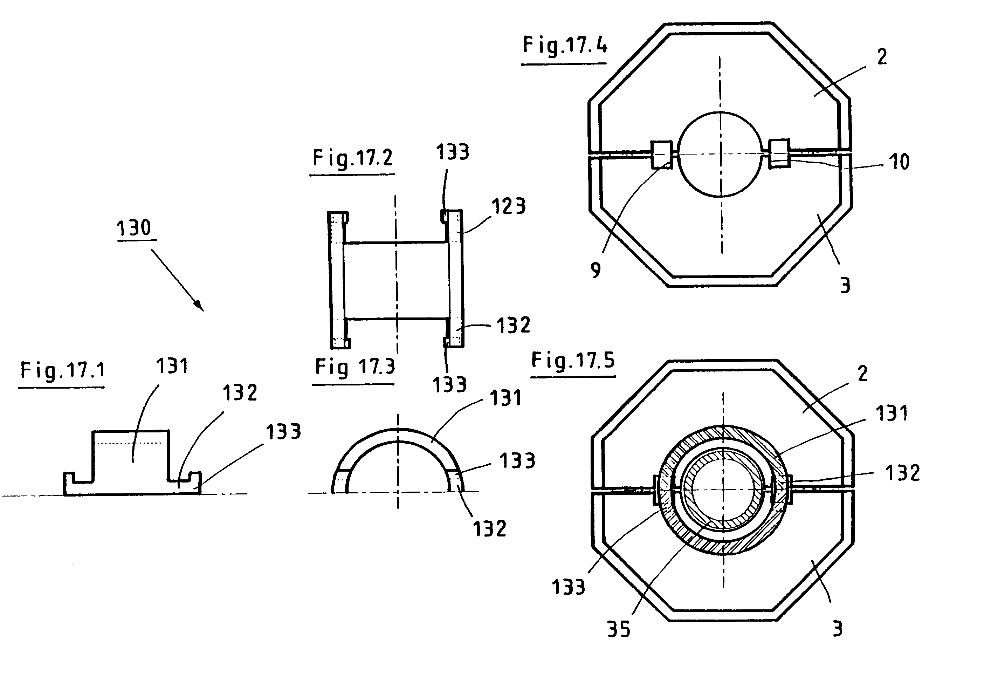

Figur 2 zeigt darüber hinaus eine weitere Verriegelungsmöglichkeit in Form einer doppelten Aussparung 9, 10, um mehrere Grundkörper miteinander drehfest zu verriegeln, wobei in die Aussparung 9, 10 weitere Hilfsmittel, wie in Figur 16 und 17 gezeigt, zur drehfesten Verriegelung eingreifen können. Alternativ können die Kassetten 2, 3 jeweils mit einer Aussparung 9 und einem Vorsprung ausgestattet sein, so daß jeweils der Vorsprung in die korrespondierende Aussparung 9 zur Verriegelung untereinander eingreift, wenn keine weiteren Hilfsmittel vorgesehen sind.

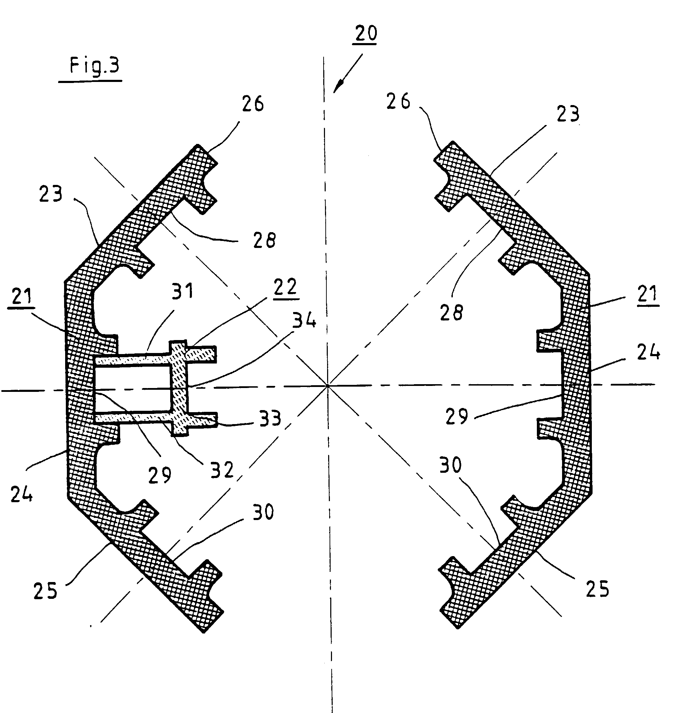

Figur 3 zeigt eine geschnittene Seitenansicht zweier sich gegenüberliegender Adapterelemente 20 für die Magnete in Form von segmentförmigen Orientierungshaltern 21 mit einem Magnetträger 22 in der linken Figurenhälfte.

Die Orientierungshalter 21 sind jeweils gleich aufgebaut und weisen eine entsprechend der Querschnittsform der Kassetten 2, 3 angepaßte Grundform mit drei einstückigen Grundseiten 23, 24 und 25 auf. Die Außenflächen der Grundseiten 23, 24, 25 können mit klemmbaren Aussparungen in Form von Nuten und Federn versehen sein, so daß die Orientierungshalter 21 sehr leicht in den Kassetten 2, 3 befestigt werden können. Alternativ besteht die Möglichkeit, daß die Orientierungshalter 21 in einen Vorsprung der Kassetten 2, 3 mit ihren Außenkanten 26 eingeklemmt werden. Die in der Figur 3 gezeigten Orientierungshalter 21 sind hingegen zum Einkleben in die Kassetten 2, 3 vorgesehen. Auf der nach innen weisenden abgewinkelten Fläche 27 sind jeweils drei einstückig angeformte U-förmige Aussparungen 28, 29, 30 in einem Winkelabstand von jeweils 45 Grad angeordnet, welche zur klemmbaren Aufnahme der Magnetträger 22 vorgesehen sind.

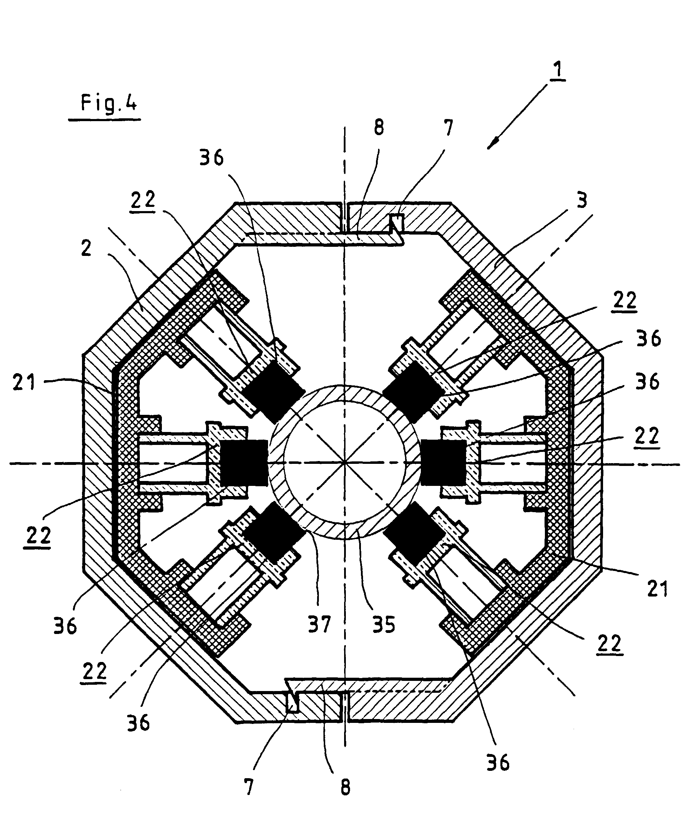

Die Magnetträger 22 sind entlang des Trägerkörpers 35, wie in Figur 4 gezeigt, angeordnet und weisen auf der zur Kassette 2, 3 zugewandten Seite zwei Stege 31, 32 auf, welche in die U-förmige Aussparung 29 des Orientierungshalters 21 eingeklemmt sind. Die Stege können hierbei entsprechend der Größe der Kassetten 2, 3, des Trägerkörpers 35 und der Magneten 36 eine entsprechend angepaßte Länge aufweisen. Auf der der Kassetten 2, 3 abgewandten Seite, das heißt in Richtung auf den Trägerkörper 35, weist der Magnetträger 21 einen im wesentlichen rechteckförmigen Körper 33 auf, welcher zur Aufnahme der einzelnen Magnete vorgesehen ist und entsprechend der Magnetform eine längliche Ausnehmung 34 für Stabmagnete oder mehrere runde Ausnehmungen für runde Magnete unterschiedlicher Tiefe aufweisen kann. Denkbar ist auch, daß mehrere unterschiedliche Magnetträger 21 in den Orientierungshalter 21 nebeneinanderliegend eingeklemmt werden, um die Variationsmöglichkeit zu erhöhen.

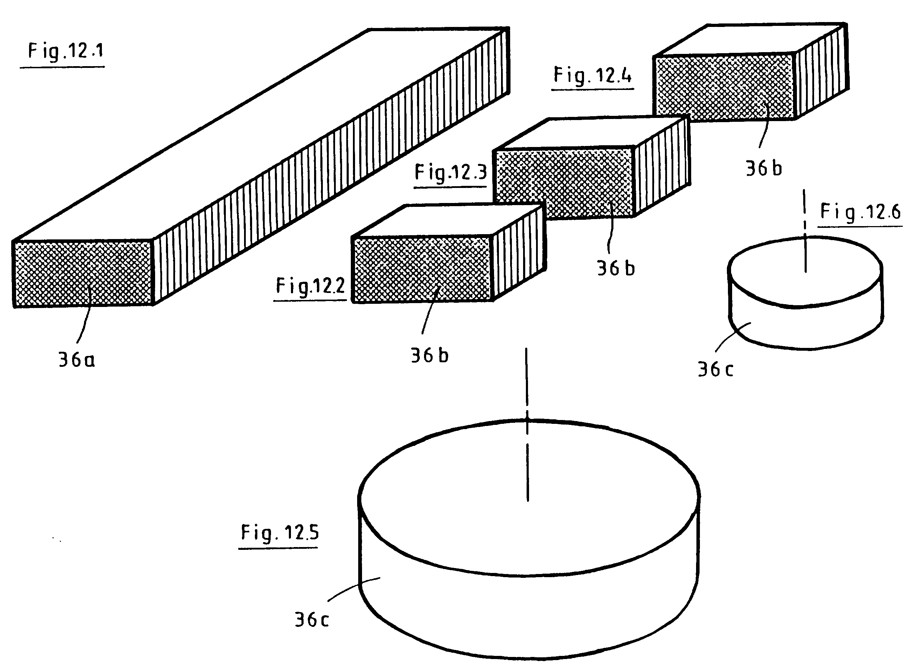

Die verschiedenen Magnete und Magnetträgerformen sind in den Figuren 12 bis 15 dargestellt.

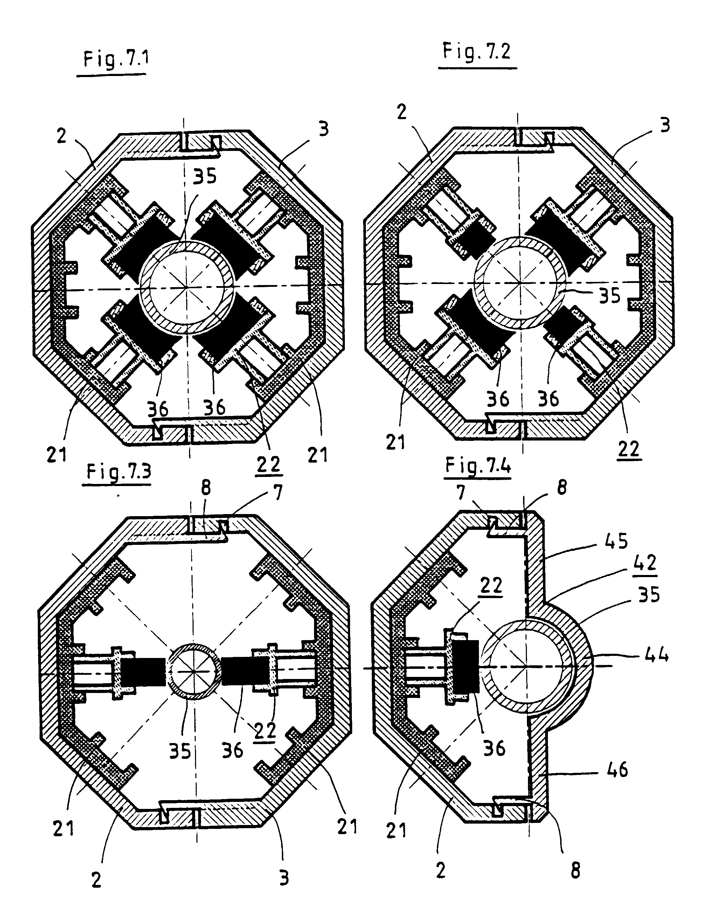

Figur 4 zeigt eine geschnittene Seitenansicht zweier zusammengefügter Kassetten 2, 3 mit zwei Orientierungshaltern 21 und insgesamt sechs bestückten Magnetträgern 22. Die Kassetten 2, 3 sind um einen Trägerkörper 35 angeordnet und mittels der Aussparungen 7 und den Haken 8 miteinander lösbar verbunden. In den Kassetten 2, 3 sind die beiden Orientierungshalter 21 mit ihren Außenflächen der Grundseiten 23, 24, 25 eingeklebt. In den Aussparungen 28, 29, 30 ist jeweils ein Magnetträger 22 aufgenommen, der einen Magneten 36 trägt. Die Magnete 36 können in Scheiben- oder Stabform, je nach der Form der Aussparung 34 verwendet werden und berühren mit ihrer nach innen zeigenden Polfläche tangential den Trägerkörper 35. Denkbar ist es, daß die Magneten 36 eine Rundung entsprechend der Form des Trägerkörpers 35 aufweisen, um den vorhandenen Luftspalt 37 so klein wie möglich zu halten, wie in Figur 7 gezeigt. Durch den Orientierungshalter 21 und die Magnetträger 22 sind die Magnete 36 in ihrer Position mit einem Winkelabstand von 45 Grad in jeder Kassette 2, 3 exakt positioniert. Bei der Verwendung von mehreren Gehäusen bzw. Kassetten 2, 3 kann durch die aus Figur 2 bekannten Verriegelungsmechanismen eine exakte Positionierung der gesamten Magnete 36 zueinander erzielt werden. Es ist jedoch nicht notwendig, daß das Gehäuse 1 bzw. die Kassetten 2, 3 vollständig bestückt sind.

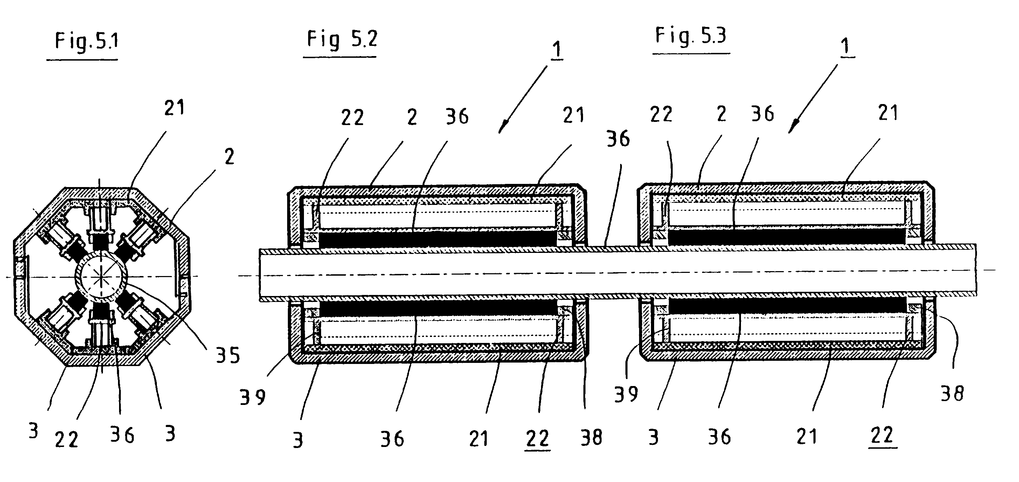

Figur 5 zeigt zwei Gehäuse 1 mit jeweils zwei Kassetten 2, 3 gemäß Figur 4 in zwei geschnittenen Ansichten in einem verkleinertem Maßstab, wobei auf einem Trägerkörper 35 zwei Gehäuse 1 nebeneinanderliegend angeordnet sind. Der Trägerkörper 35 ist in diesem Ausführungsbeispiel als Rohr eines Leitungssystems dargestellt und die Magnetträger 22 sind mit rechteckförmigen Stabmagneten 36 vollständig bestückt, wobei der Magnetträger 22 zweiteilig aufgebaut ist. Das erste Teil 38 des Magnetträgers 22 besteht aus einer scheibenförmigen Auflage, in welche die Ausnehmung 34 für den Magneten 36 eingearbeitet ist. Das zweite Teil 39 weist eine U-förmige Form mit zwei Stegen 31, 32 und einer ebenen Auflagefläche 40 auf, auf der das erste Teil 38 zur leichteren maschinellen Fertigung aufgeklebt ist.

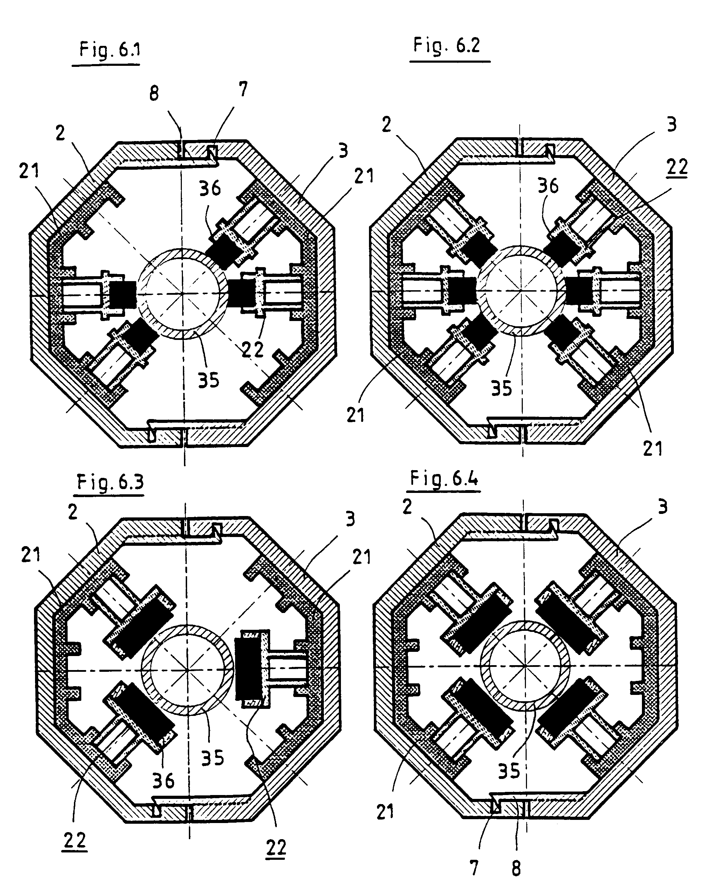

Figur 6 zeigt vier geschnittene Seitenansichten eines Gehäuses 1 gemäß Figur 4 mit jeweils zwei Kassetten 2, 3 und einer unterschiedlichen Bestückung der Orientierungshalter 21. In der oberen rechten Teilfigur sind die beiden Orientierungshalter 21 vollständig mit Magnetträgern 22 und Magneten 36 bestückt. In der oberen linken Teilfigur sind die beiden Orientierungshalter 21 nur teilweise mit Magnetträgern 22 und Magneten 36 bestückt, wobei sich die Magnetträger 22 und Magnete 36 jeweils paarweise gegenüberliegen. In den beiden unteren Teilfiguren sind die beiden Orientierungshalter 21 wahlweise mit drei und vier Magnetträgern 22 und Magneten 36 bestückt, welche jedoch gegenüber den oberen Teilfiguren einen größeren Durchmesser bzw. eine größere Breite aufweisen.

Figur 7 zeigt vier geschnittene Seitenansichten eines Gehäuses 1 gemäß Figur 4 mit jeweils zwei Kassetten 2, 3 bzw. einer Kassette 2 mit einer Abdeckplatte 42 und einer unterschiedlichen Bestückung der Orientierungshalter 21. In der linken oberen Teilfigur sind die Orientierungshalter 21 mit gleichen Magnetträger 22 und gleichgroßen Magneten 36 bestückt, wobei die Magnete 36 eine dem Trägerkörper 35 zugewandte gekrümmte Polfläche 43 mit einem Krümmungsradius entsprechend dem äußeren Radius des Trägerkörpers 35 aufweisen. In der rechten oberen Teilfigur sind die Orientierungshalter 21 mit jeweils paarweise unterschiedlichen Magnetträger 22 und Magneten 36 bestückt, während in der unteren linken Teilfigur nur jeweils ein Magnetträger 22 mit einem Magnet 36 in dem Orientierungshalter 21 aufgenommen ist und die Magnete 36 an den kleineren Trägerkörper 35 angepaßt wurden, in dem der rechteckförmige Querschnitt der Magneten mit der größten Abmessung in Richtung auf den Trägerkörper 35 angeordnet wurde. In der rechten unteren Teilfigur besteht das Gehäuse 1 aus nur einer Kassette 2 mit zwei Nuten 7 und einer Abdeckplatte 42, welche im mittleren Teil eine Rundung 44 entsprechend der Größe des Trägerkörpers 35 und zwei ebene Teilflächen 45, 46 aufweist, welche die Kassette 2 verschließen und mit zwei Haken 8 versehen sind, die in die Nuten 7 der Kassette 2 zum Halt eingreifen.

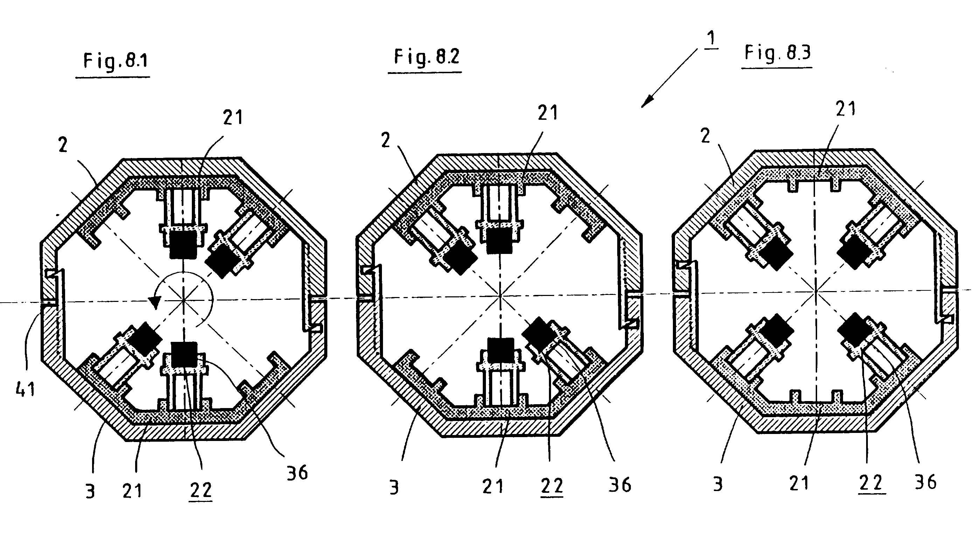

Figur 8 zeigt drei geschnittene Seitenansichten eines Gehäuses 1 gemäß Figur 4 mit jeweils zwei Kassetten 2, 3 und einer teilweisen Bestückung der Orientierungshalter 21 mit Magneten 36. Innerhalb eines Gehäuses 1 bzw. einer Kassette 2, 3 können mehrere Polebenen mit kurzen Stabmagneten oder runden Scheibenmagneten in Längsrichtung des Trägerkörpers 35 angeordnet sein, wobei jede Polebene eine andere Bestückung aufweisen kann, wie in Figur 8 gezeigt. Unter der Annahme, daß der Kreisquerschnitt der geschnittenen Seitenansicht des Gehäuses 1 mit null Grad bei der Berührungsfläche 41 beginnt und die Magneten 36 wahlweise unter 45, 90 und 135 bzw. die gegenüberliegenden unter 225, 270 und 315 Grad angeordnet sind, kann beispielsweise bei einer Bestückung in der ersten und vierten Polebene unter 45 und 90 Grad, linke Teilfigur, und einer Bestückung in der zweiten und fünften Polebene, mittlere Teilfigur, unter 90 und 135 Grad sowie einer Bestückung in der dritten Polebene, rechte Teilfigur, unter 45 und 135 Grad quasi ein Drehfeld gegen den Uhrzeigersinn in Längsrichtung des Trägerkörpers 35 aufgebaut werden.

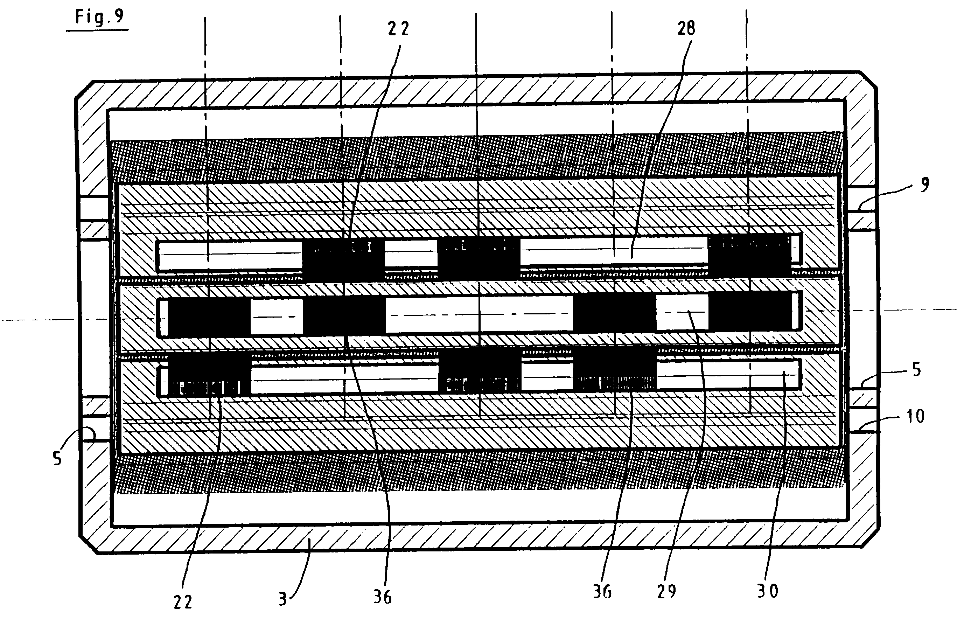

Figur 9 zeigt einen Axialschnitt durch das Gehäuse 1 gemäß Figur 8, aus dem die beschriebene Anordnung der fünf Polebenen erkennbar ist, wobei die erste Polebene links und die fünfte rechts angeordnet ist. Aus dieser Darstellung ist erkennbar, daß die erste und vierte bzw. die zweite und fünfte Polebene gleichartig bestückt sind. Ebenso sind die Aussparungen 28, 29 und 30 zur Aufnahme der Magnetträger 22 mit einer axialen Erstrekkung erkennbar. Die seitlichen Stirnflächen der Kassette 3 weisen ferner die zentrale Aussparung 5 für den Trägerkörper und zwei Nuten 9, 10 zur drehfesten Verriegelung mit benachbarten Gehäusen 1 auf.

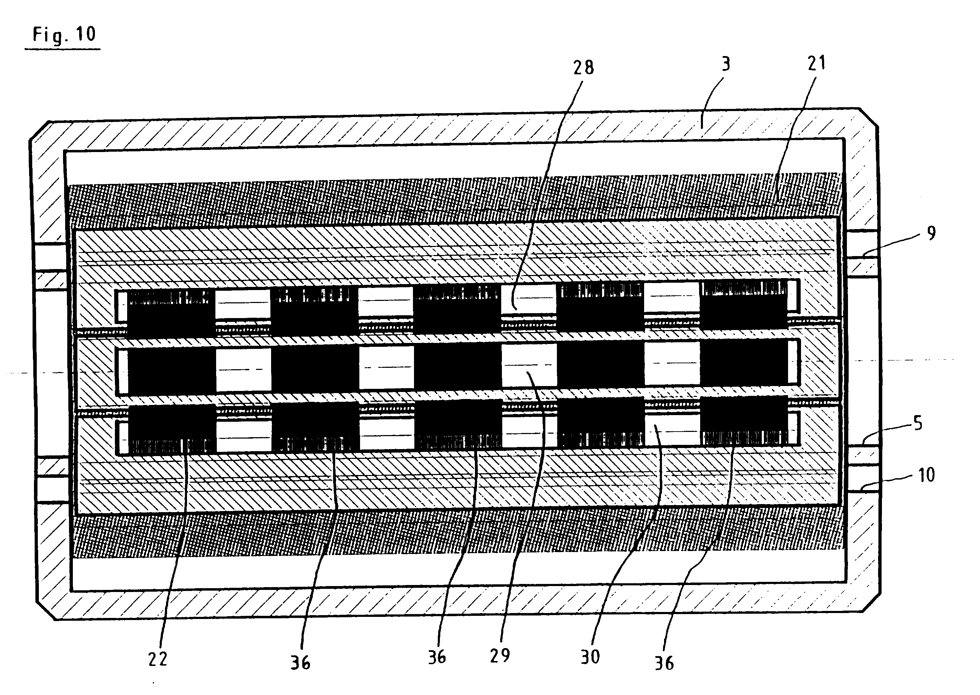

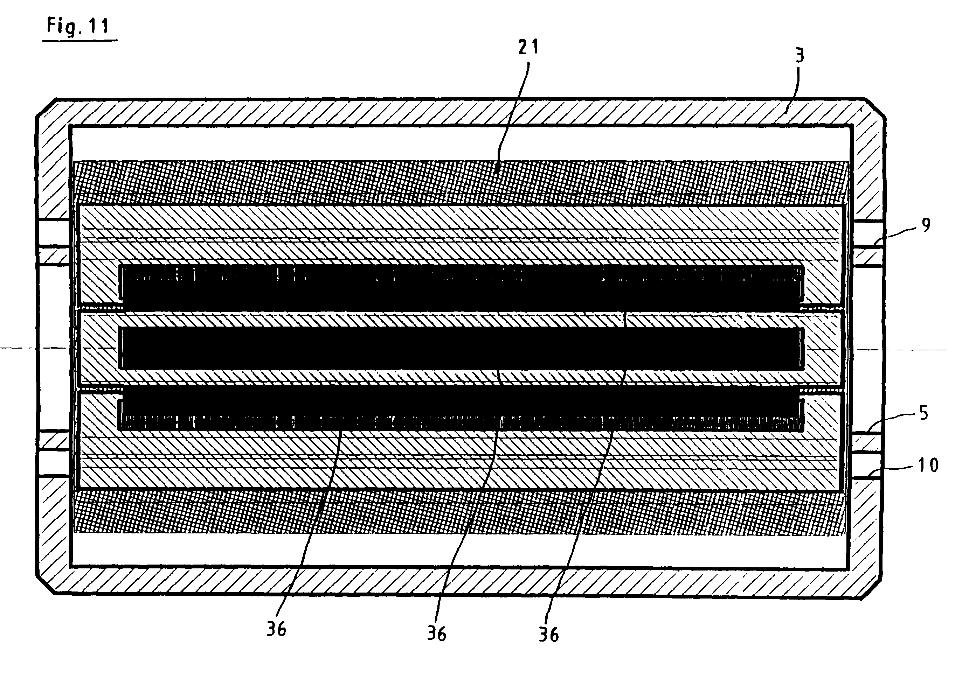

Figur 10 und 11 zeigen weitere Axialschnitte gemäß Figur 9 mit einer anderen Bestückung. Figur 10 zeigt beispielsweise eine vollständige Bestückung des Gehäuses 1 mit Magneten 36 in fünf Polebenen, während Figur 11 eine vollständige Bestückung mit Stabmagneten 36 in einer Polebene zeigt, die jeweils mittels einer entsprechenden Anzahl von Magnetträgern 22 in einem Orientierungshalter 21 befestigt sind.

Insgesamt zeigen die Teilfiguren aus Figur 6 bis 8 sowie die Figuren 9 bis 11, daß eine variantenreiche Bestükkung der Gehäuse 1 erfolgen kann und somit eine individuelle Anpassung an verschiedene Fluids und Anforderungen möglich ist.

Figur 12 zeigt eine Auswahl von verwendbaren Permanentmagneten 36, mit denen das Gehäuse 1 bestückt werden kann. Es ist von links nach rechts abgebildet, ein Stab- oder Blockmagnet 36a, drei quaderförmige Magnete 36b mit einer unterschiedlichen Bauhöhe und zwei scheibenförmige Magnete 36c mit einer unterschiedlichen Bauhöhe und einem unterschiedlichen Durchmesser.

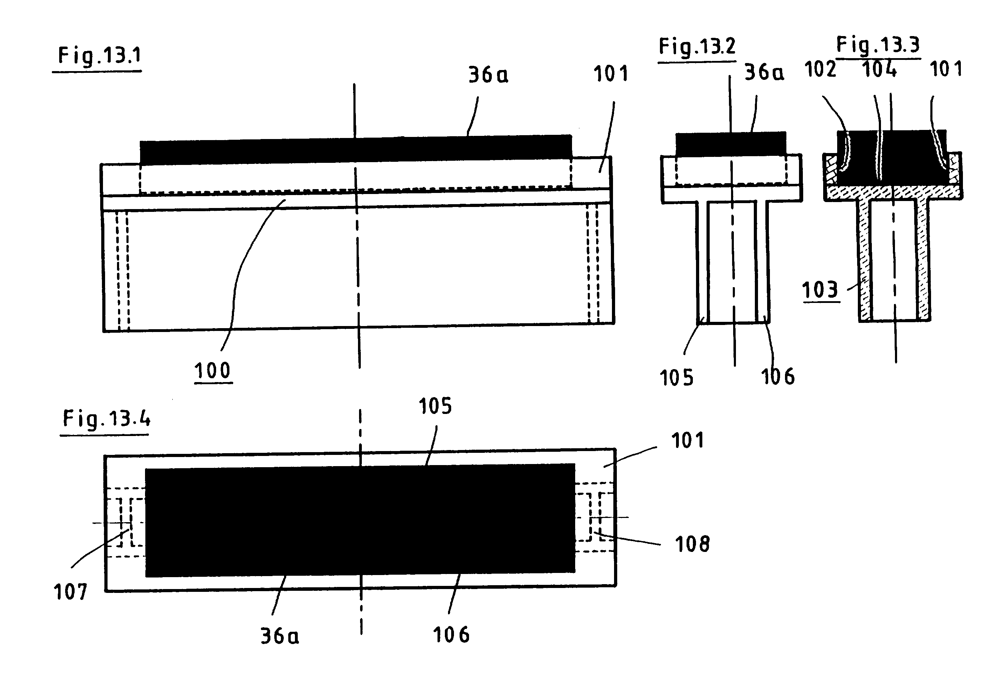

Figur 13 zeigt mehrere Ansichten eines Magnetträgers 100 für einen Stab- oder Blockmagneten 36a, wobei der Magnetträger 100 zweiteilig aufgebaut ist, mit einem ersten Teil 101, welches eine rechteckförmige Nut 102 zur Aufnahme des Permanentmagneten 36a aufweist und mit einem zweiten Teil 103 verklebt ist, welches eine Planfläche 104 zum ankleben des ersten Teils 101 und zwei Stege 105, 106 sowie zwei weitere Versteifungsstege 107, 108 aufweist. Die Stege 105, 106 sind zum Einstecken in die Aussparung 28, 29 oder 30 des Orientierungshalters 21 vorgesehen. Die Stege 105, 106 können je nach verwendeten Permanentmagneten 36 und Trägerkörper 35 in der Länge variieren. Ebenso kann die Länge des Magnetträgers 100 in axialer Richtung je nach Anwendungsfall variieren.

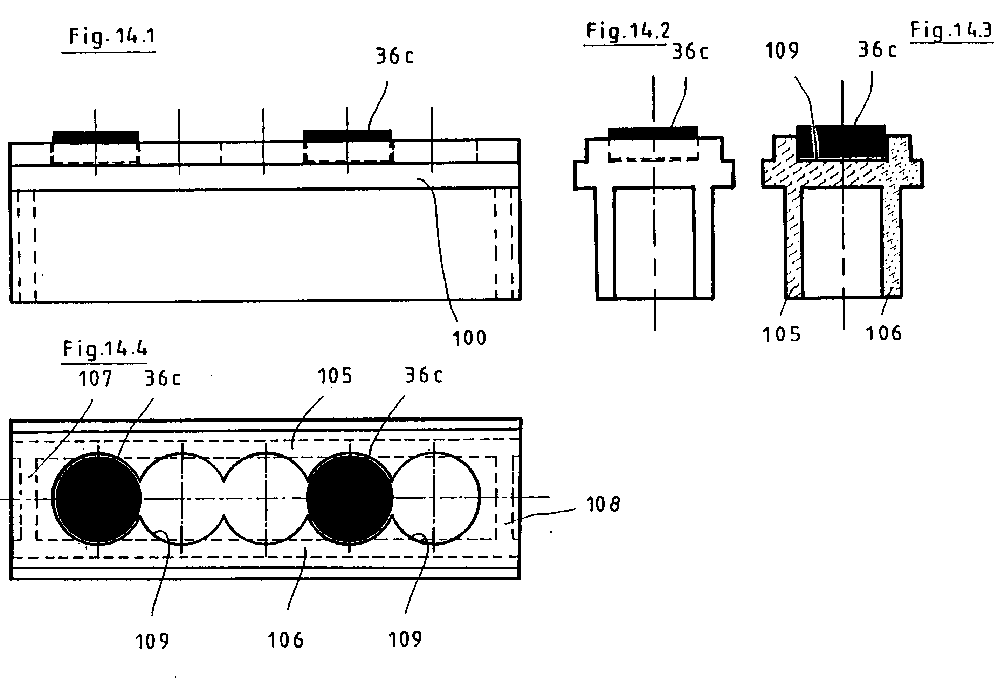

Figur 14 zeigt mehrere Ansichten eines Magnetträgers 100 für scheibenförmige Permanentmagnete 36c, wobei der Magnetträger 100 fünf kreisrunde nebeneinanderliegende Ausnehmungen 109 aufweist, die nur mit zwei Magneten 36c bestückt sind. Entgegen der Ausführung gemäß Figur 13 ist der Magnetträger 100 einstückig ausgebildet und weist unterhalb der Ausnehmungen 109 zwei angeformte Stege 105, 106 und Versteifungsstege 107, 108 auf, welche in der Materialstärke gegenüber Figur 13 abweichen.

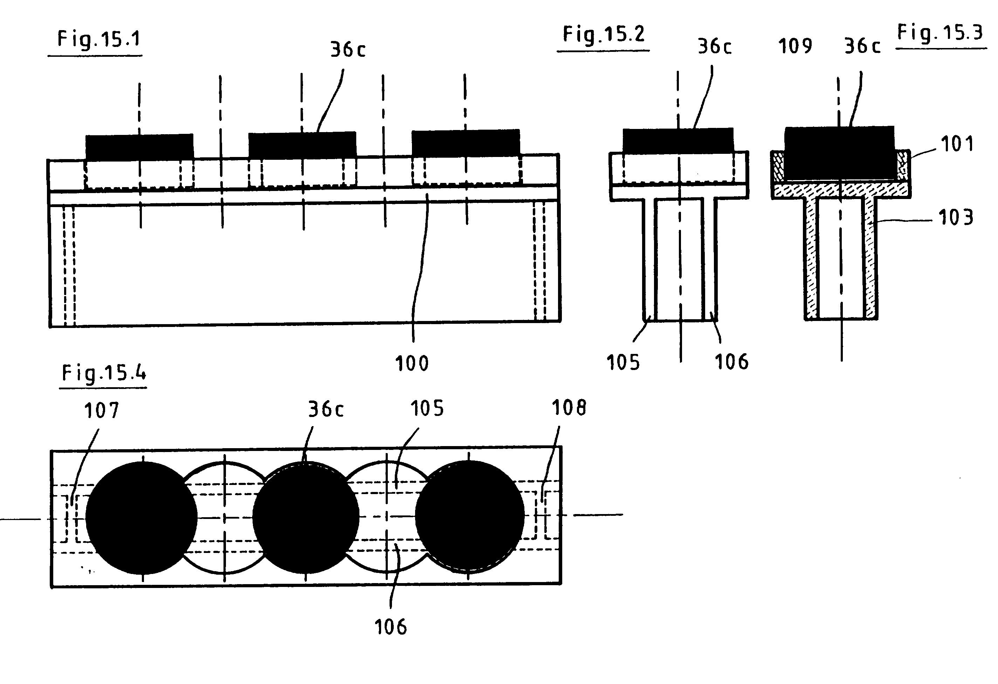

Figur 15 zeigt mehrere Ansichten eines Magnetträgers 100 für runde Permanentmagneten 36c gemäß Figur 14 in einer wiederum zweiteiligen Ausführung mit einem ersten Teil 101 und einem zweiten Teil 103, welche miteinander verklebt sind. Im ersten Teil 101 sind fünf kreisrunde nebeneinanderliegende Ausnehmungen 109 vorhanden, die wechselweise mit insgesamt drei Magneten 33c bestückt sind, wobei die Höhe der Magnete 36 dem Trägerkörper 35 angepaßt werden kann.

Figur 16 zeigt eine Vollansicht und eine geschnittene Teilansicht eines Trägerkörpers 35 mit zwei nebeneinander angeordneten Gehäusen 1, die einen Aufbau gemäß Figur 2 und 4 aufweisen, wobei die beiden Gehäuse durch zwei Abstandshalter 120, welche in die Nuten 9, 10 der Kassetten 2, 3 eingreifen, auf einen bestimmten Abstand zueinander gehalten werden. Die Abstandshalter 120 dienen hierbei gleichzeitig als Verdrehsicherung, so daß die Gehäuse 1 auf dem Trägerkörper drehfest gehalten sind. Die axiale Positionsfestlegung der Gehäuse 1 auf dem Trägerkörper 35 erfolgt entweder durch ein Einklemmen des Trägerkörpers 35 oder durch andere beschriebene Hilfsmittel.

Figur 17 zeigt eine Abstands- und Verdrehsicherung 130, welche bei einem Gehäuse 1 mit zwei Kassetten 2, 3 gemäß Figur 2 zur Anwendung kommt. Die rechte obere Teilfigur zeigt die Anordnung der beiden Kassetten 2, 3 mit Aussparungen 9, 10. Die linken Teilfiguren zeigen drei Ansichten der Abstands- und Verdrehsicherung 130, welche aus einem halbkreisförmigen Rohrhälftenabschnitt 131 besteht, der einen größeren Durchmesser aufweist, wie der des Trägerkörpers 35, so daß die Abstands- und Verdrehsicherung 130 zwischen zwei Gehäusen 1 über den Trägerkörper 35 gelegt werden kann, wie insbesondere aus der unteren rechten Teilfigur ersichtlich. An den Rohrhälftenabschnitt 131 sind auf beiden Stirnseiten zwei axiale Verlängerungen 132 mit jeweils einer Nase 133 am Bogenende angeformt. Die Verlängerungen 132 mit den Nasen 133 hintergreifen die Stirnwand der Kassetten 2, 3 durch die Nuten 9, 10, so daß ein durch die Breite der Rohrhälftenabschnitte 131 vorgegebener Abstand der Gehäuse 1 bzw. Kassetten 2, 3 eingehalten und gleichzeitig eine Verdrehung der beiden Gehäuse 1 gegeneinander verhindert wird.

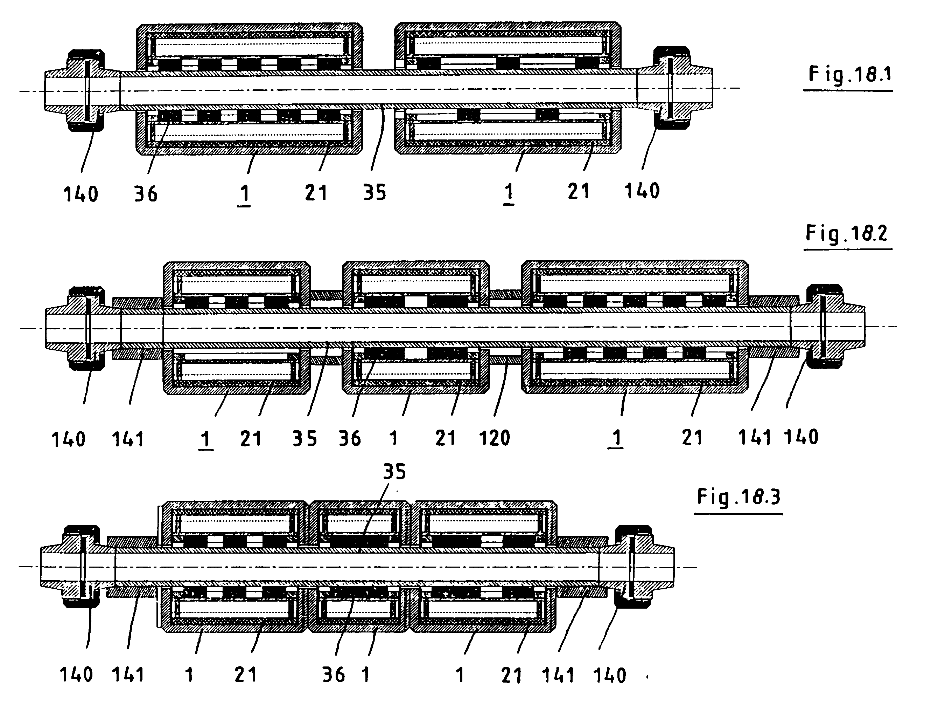

Die Figuren 18 bis 23 zeigen die Anordnung mehrerer Gehäuse 1 auf einem Trägerkörper 35 mit einer unterschiedlichen Bestückung der Orientierungshalter 21 mit Magnetträgern 22 und Magneten 36 im Längsschnitt. Die Anordnung der Gehäuse 1 erfolgt wahlweise seriell oder parallel oder in einer Kombination von beiden auf dem Trägerkörper 35 bzw. 144.

Figur 18 zeigt in der oberen Teilfigur einen Trägerkörper 35 mit Schraubanschlüssen 140 und zwei Gehäusen 1, die links vollständig und rechts nur teilweise bestückt sind. Die beiden gleichlangen Gehäuse 1 sind zueinander beabstandet auf dem Trägerkörper 35 montiert. In der mittleren Teilfigur sind auf einem längeren Trägerkörper 35 insgesamt drei Gehäuse 1 unterschiedlicher Baulänge mit unterschiedlicher Bestückung und unterschiedlichen Magneten 36 gezeigt, wobei zwischen den Gehäusen 1 eine Abstands- und Verdrehsicherung 120 angeordnet ist. In der unteren Teilfigur hingegen sind die Gehäuse 1 mit unterschiedlicher Baulänge nicht beabstandet, sondern berühren sich mit ihren Stirnflächen. Eine Verdrehung kann hierbei durch den Eingriff eines Vorsprunges der Stirnfläche in eine der Nuten 9, 10 der benachbarten Stirnfläche verhindert werden. Zusätzlich befinden sich in der mittleren und unteren Teilfigur am Ende der Anordnung aus Gehäusen 1 jeweils eine ringförmige Sicherung 141, um die axiale Position der Anordnung festzulegen.

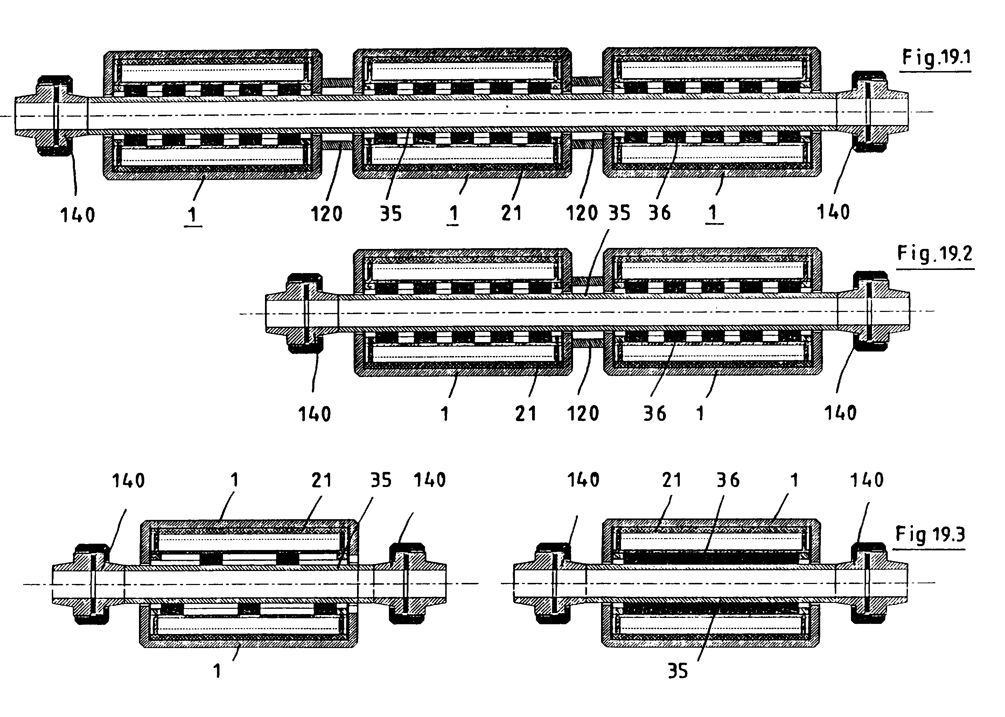

Figur 19 zeigt in der oberen Teilfigur eine Anordnung von drei Gehäusen 1 auf einem Trägerkörper 35 mit Abstands- und Verdrehsicherung 120, wobei die drei Gehäuse 1 jeweils vollständig mit Magneten 36 bestückt sind.

In der mittleren Teilfigur ist eine vergleichbare Anordnung mit nur zwei Gehäusen 1 gezeigt, während die beiden unteren Teilfiguren jeweils nur ein Gehäuse 1 mit unterschiedlicher Bestückung auf dem Trägerkörper 35 zeigen.

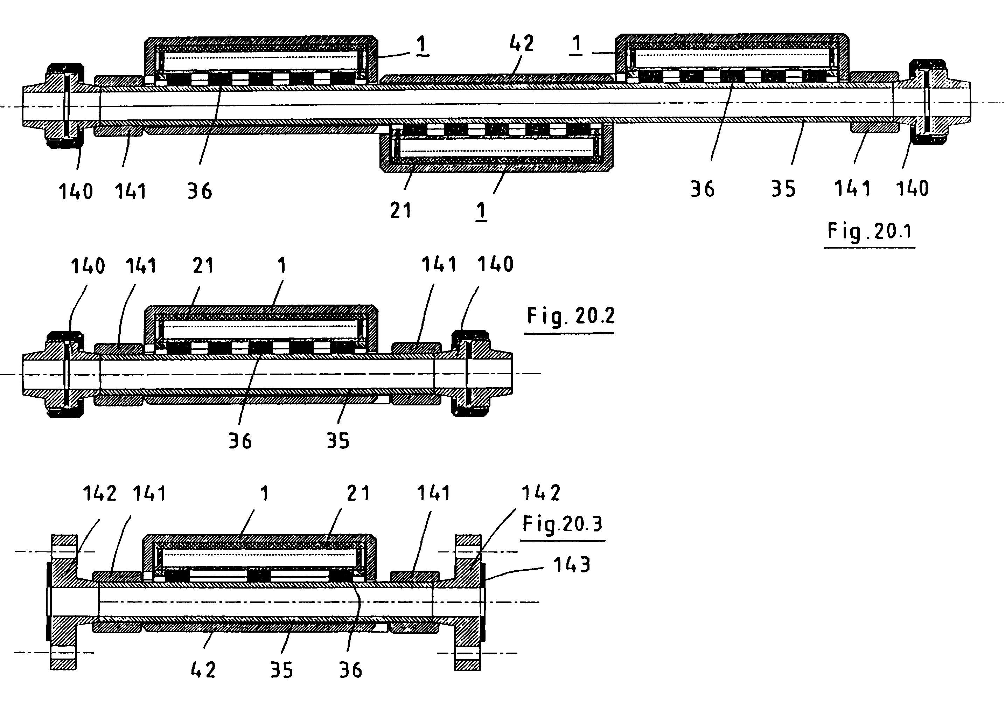

Figur 20 zeigt in der oberen Teilfigur eine Anordnung von drei Gehäusen 1, bestehend aus jeweils einer Kassette 2 mit einer Abdeckung 42, die vollständig mit Magneten 36 bestückt sind. Die Gehäuse 1 sind nicht beabstandet und über zwei ringförmige Sicherungen 141 auf dem Trägerkörper 35 mit zwei Schraubanschlüssen 140 ortsfest gehalten. In der mittleren und unteren Teilfigur ist eine vergleichbare Anordnung mit nur einem Gehäuse 1 gezeigt, wobei die Bestückungen unterschiedlich ausgeführt sind und in der unteren Teilfigur anstelle eines Schraubanschlüsses 141 ein Flanschanschluß 142 mit Dichtungsscheibe 143 vorgesehen ist.

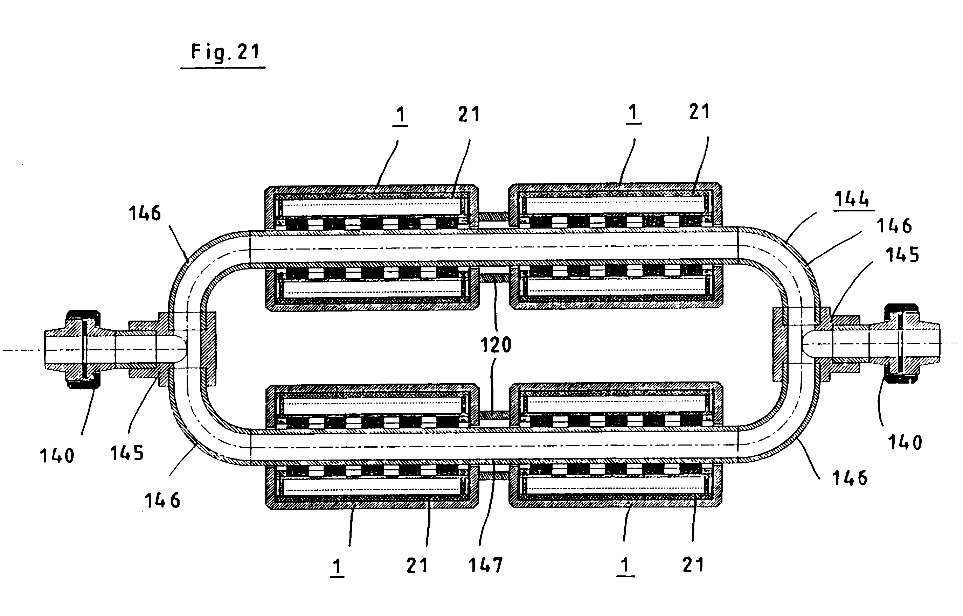

Figur 21 zeigt eine Anordnung von vier Gehäusen 1 auf einem Trägerkörper 144 mit Schraubanschlüssen 141, der aus zwei T-förmigen Ansatzstücken 145, vier Bogenstücken 146 und zwei parallelen geraden Rohrstücken 147 besteht und den Fluidstrom zweifach aufteilt. Auf jedem geraden Rohrstück 147 befinden sich zwei Gehäuse 1 mit gleicher Bestückung von Magneten 36. Die gesamte Vorrichtung zur Fluidaufbereitung kann im Austausch gegen ein vorhandenes Rohrstück in das Rohrsystem eingesetzt werden und ermöglicht je nach Bedarf eine Aufbereitung mit einem höheren Wirkungsgrad.

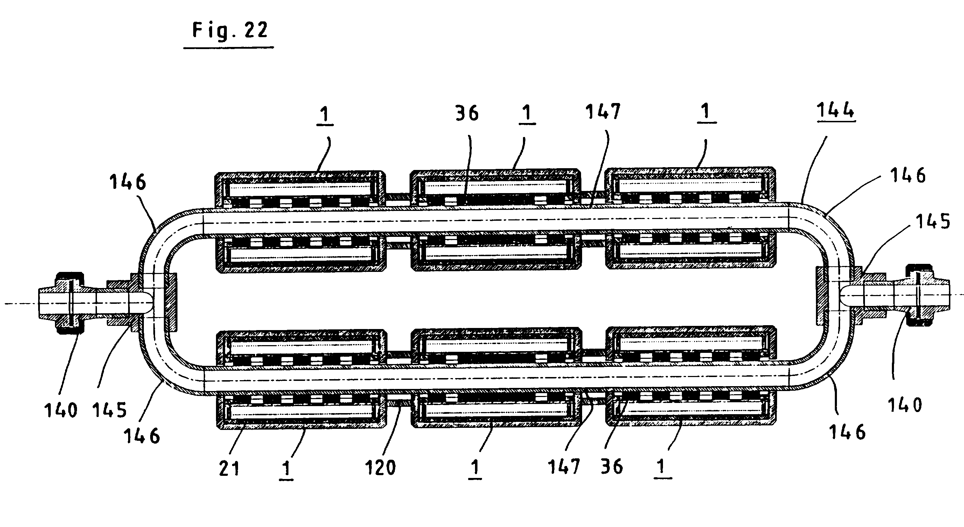

Figur 22 zeigt eine Anordnung von sechs Gehäusen 1 mit unterschiedlicher Bestückung von Magneten 36 gemäß Figur 21, wobei die geraden Rohrstücke 147 länger ausgeführt sind, damit jeweils drei Gehäuse 1 aufgenommen werden können. Die Länge der geraden Rohrstücke 147 ist dem Bedarf entsprechend auszulegen, so daß auch mehr als 2 oder drei Gehäuse 1 auf dem Rohrstück 147 befestigt werden können. Es ist auch denkbar, daß mehr als zwei Verzweigungen des Fluidstromes vorgenommen werden, damit ggfs. eine wesentlich höhere Anzahl von Gehäusen 1 vorgesehen werden kann.

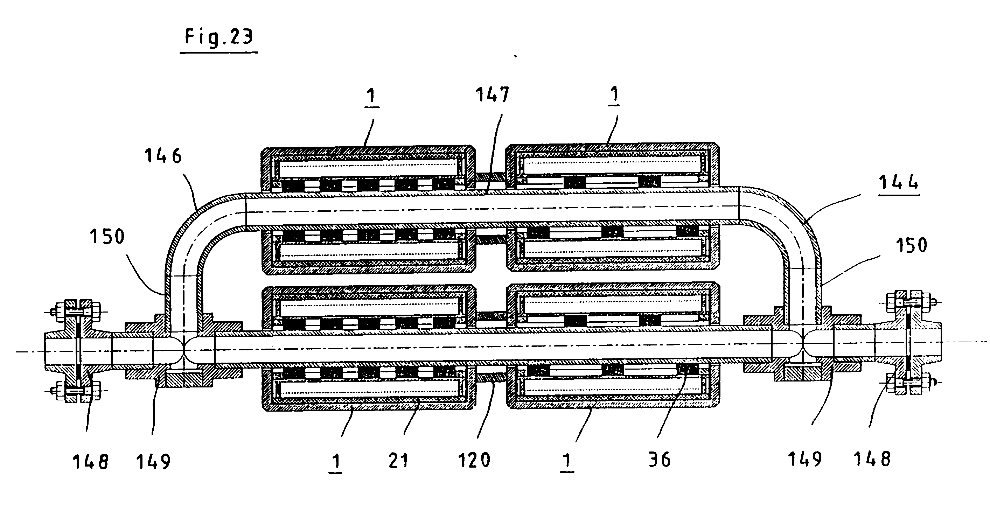

Figur 23 zeigt beispielsweise eine Anordnung von vier Gehäusen 1 in einer Kombination aus Serien- und Parallelschaltung mit unterschiedlicher Bestückung auf einem Trägerkörper 144 mit Vorschweißflanschen 148. Der Trägerkörper 144 besteht in diesem Ausführungsbeispiel aus zwei kreuzförmigen Ansatzstücken 149, zwei kurzen geraden Rohrstücken 150, zwei Bogenstücken 146 und zwei parallelen Rohrstücken 147 unterschiedlicher Länge. An das kreuzförmige Ansatzstück könnten ggfs. zwei weitere kurze Rohrstücke 150 mit Bogenstücken 146 und einem geraden Rohrstück 147 angeschlossen werden, so daß eine Dreiteilung des Fluidstromes möglich wäre.

## Patentansprüche

1. Vorrichtung, insbesondere zur magnetischen Fluidaufbereitung, mit zumindest einem mehrteiligen Gehäuse (1), welches auf einem Trägerkörper (35) montierbar ist und sich zumindest teilweise um den Außenumfang des Trägerkörpers (35) erstreckt und mindestens einen Permanentmagneten (36) aufweist,
dadurch gekennzeichnet,
daß das Gehäuse (1) zur Aufnahme mindestens eines Adapterelementes (20) ausgebildet ist, welches jeweils mit einer frei wählbaren Anzahl und Anordnung von Permanentmagneten (36) in Axial-und/oder Umfangsrichtung des Trägerkörpers (35) bestückt ist, wobei die Permanentmagnete (36) innerhalb des Gehäuses (1) zueinander dreh-und ortsfest gehalten sind.

2. Vorrichtung nach Anspruch 1,
dadurch gekennzeichnet,
daß die Adapterelemente (20) zur Aufnahme von Permanentmagneten mit gleicher und/oder unterschiedlicher Baugröße (36) vorgesehen ist, welche hinsichtlich des Magnetmaterials, der Pollage, der Polorientierung und Polzahl pro Magnet beliebig auswählbar und nachträglich veränderbar sind.

3. Vorrichtung nach Anspruch 1 oder 2,
dadurch gekennzeichnet,
daß mehrere Gehäuse (1) hintereinander auf dem Trägerkörper (35) angeordnet sind.

4. Vorrichtung nach Anspruch 3,
dadurch gekennzeichnet,
daß die Gehäuse (1) untereinander mit gleichen oder unterschiedlichen Permanentmagneten (36) bestückt sind.

5. Vorrichtung nach Anspruch 3,
dadurch gekennzeichnet,
daß die Gehäuse (1) auf dem Trägerkörper (35) ortsfest, aber verdrehbar oder orts- und drehfest angeordnet sind.

6. Vorrichtung nach Anspruch 5,
dadurch gekennzeichnet,
daß die Gehäuse (1) an den stirnseitigen Flächen untereinander drehfest, beispielsweise durch Nut-Feder- oder Vorsprung-Rücksprung-Kombinationen, gehalten sind.

7. Vorrichtung nach Anspruch 5,
dadurch gekennzeichnet,
daß die Gehäuse (1) auf dem Trägerkörper (35) durch Rohrabschnitte, Abstandsbolzen, welche in Bohrungen oder Ausschnitte der Gehäuse (1) eingreifen oder durch Muffen mit ausreichend großem Außendurchmesser axial befestigt sind.

8. Vorrichtung nach Anspruch 5,
dadurch gekennzeichnet,
daß der Trägerkörper (35) zur genauen Positionierung des Gehäuses (1) in Abschnitte, beispielsweise durch Ringe, Rohr- oder Rohrhälftenabschnitte (131) unterteilt ist, welche über eine Preßpassung, durch Aufschweißen, Kleben, Löten, Feststellschrauben oder Federn mit dem Trägerkörper (35) verbunden sind.

9. Vorrichtung nach Anspruch 8,
dadurch gekennzeichnet,
daß die Ringe, Rohr- oder Rohrhälftenabschnitte (131) einen oder mehrere hakenförmige Anschlüsse (133) aufweisen, welche auf beiden Seiten in das oder die Gehäuse (1) eingreifen.

10. Vorrichtung nach einem oder mehreren der Ansprüche 1-9,
dadurch gekennzeichnet,
daß der Trägerkörper (35) ein Rohr oder ein Kanal eines Leitungssystems ist.

11. Vorrichtung nach einem oder mehreren der Ansprüche 1-10,
dadurch gekennzeichnet,
daß der Trägerkörper (35) ein Bestandteil der Vorrichtung ist.

12. Vorrichtung nach einem oder mehreren der Ansprüche 1-11,
dadurch gekennzeichnet,
daß der Trägerkörper (35) den Fluidstrom in mehrere, insbesondere zwei Teilströme, aufteilt.

13. Vorrichtung nach einem oder mehreren der Ansprüche 1-12,
dadurch gekennzeichnet,
daß der Trägerkörper (35) aus einem nicht-magnetischen Werkstoff, beispielsweise aus Messing, Kupfer oder Edelstahl, insbesondere aus einem im Lebensmittelbereich einsetzbaren, beständigen Kunststoff hergestellt ist.

14. Vorrichtung nach einem oder mehreren der Ansprüche 1-13,
dadurch gekennzeichnet,
daß der Trägerkörper (35) zumindest im Bereich der Aufnahme der Gehäuse (1) gerade ausgeführt und an den Enden mit geraden oder gebogenen herkömmlichen Anschlußelementen, beispielsweise Flansch- (148), Verschraubungs-(141) oder Lötanschlüssen ausgestattet oder unter Verwendung von Überwurfmuttern, Verschraubungen oder Klammerflanschverbindungen verbindbar ist.

15. Vorrichtung nach einem oder mehreren der Ansprüche 1-13,
dadurch gekennzeichnet,
daß mehrere Gehäuse (1) hintereinander auf dem Trägerkörper (35) in einem oder mehreren Teilströmen angeordnet sind.

16. Vorrichtung nach einem oder mehreren der Ansprüche 1-15,
dadurch gekennzeichnet,
daß das Gehäuse (1) aus einer zweiteiligen Kassette (2, 3) mit einer Aussparung (5) für den Trägerkörper (35) besteht, wobei eine Kassette (2, 3) mit einer Abdeckplatte (42) versehen ist oder jeweils zwei Kassetten (2, 3) miteinander kombiniert sind.

17. Vorrichtung nach Anspruch 16,
dadurch gekennzeichnet,
daß das Gehäuse (1), bestehend aus einer zweiteiligen Kassette (2, 3), eine unterschiedliche Länge und eine Grundform mit einem runden, ovalen oder eckigen, insbesondere 4-, 8- oder mehreckigen Querschnitt bei zwei gegenüberliegenden Kasseten (2, 3) aufweist.

18. Vorrichtung nach einem oder mehreren der Ansprüche 1-17,
dadurch gekennzeichnet,
daß die Kassetten (2, 3) nahezu spiegelsymmetrisch aufgebaut sind und daß die Kassetten (2, 3) durch Haken (8), welche in eine korrespondierende Nut (7) der gegenüberliegenden Kassette (2, 3) einrasten, gehalten sind oder daß zur Verbindung der beiden Kassetten (2, 3) eine Schraub-, Niet-, Klammer-, Klebe-, Bandagen- oder Schweißverbindung vorgesehen ist.

19. Vorrichtung nach einem oder mehreren der Ansprüche 1-18,
dadurch gekennzeichnet,
daß zur Erzeugung des Magnetfeldes Permanentmagnete (36) mit variabler Größe hinsichtlich des Durchmessers oder der Länge und Breite sowie der Höhe in Block-, Stab-, Scheiben- oder Stangenform vorgesehen sind.

20. Vorrichtung nach einem oder mehreren der Ansprüche 1-19,
dadurch gekennzeichnet,
daß die Permanentmagnete (36) gekrümmte Polflächen (43) auf der dem Trägerkörper (35) zugewandten Seite aufweisen.

21. Vorrichtung nach einem oder mehreren der Ansprüche 1-20,
dadurch gekennzeichnet,
daß die Permanentmagnete (36) aus Schwachmagneten oder aus Höchstleistungsmagneten bestehen.

22. Vorrichtung nach einem oder mehreren der Ansprüche 1-21,
dadurch gekennzeichnet,
daß die Permanentmagnete (36) eine unterschiedliche Polstärke, Polstruktur, d.h. Polzahl, Polgröße und Pollage an den Außenflächen aufweisen.

23. Vorrichtung nach einem oder mehreren der Ansprüche 1-22,
dadurch gekennzeichnet,
daß das Adapterelement (20) Nuten, Bohrungen oder Aussparungen (34) zur Aufnahme der Permanentmagnete (36) aufweist.

24. Vorrichtung nach einem oder mehreren der Ansprüche 1-23,
dadurch gekennzeichnet,
daß das Adapterelement (20) in Nuten, Bohrungen oder Aussparungen des Gehäuses (1) bzw. den Kassetten (2, 3), insbesondere einklemmbar, aufgenommen ist oder anderweitig mit dem Gehäuse (1) bzw. den Kassetten (2, 3), beispielsweise verklebt, verbunden ist.

25. Vorrichtung nach einem oder mehreren der Ansprüche 1-24,
dadurch gekennzeichnet,
daß die Adapterelemente (20) zumindest zweiteilig aufgebaut sind, mit einem Magnetträger (22) zur Aufnahme der Permanentmagnete (36) und einem Orientierungshalter (21) zur drehfesten Positionierung des Magnetträgers (22) in den Kassetten (2, 3) des Gehäuses (1).

26. Vorrichtung nach Anspruch 25,
dadurch gekennzeichnet,
daß der Magnetträger (22) zweiteilig aufgebaut ist, mit einem ersten Teil (101), welches die Nuten, Bohrungen oder Aussparungen (104) zur Aufnahme der Permanentmagnete (36) aufweist und einem zweiten Teil (103), welches eine Planfläche zum Aufkleben des ersten Teils (101) und zwei Stege (105, 106) zum Tiefenausgleich zwischen Gehäuse (1) und Trägerkörper (35) aufweist.

27. Vorrichtung nach Anspruch 25 oder 26,
dadurch gekennzeichnet,
daß das zweite Teil (103) und der Orientierungshalter (21) einstückig ausgebildet sind.

28. Vorrichtung nach Anspruch 25 oder 26,
dadurch gekennzeichnet,
daß der Orientierungshalter (21) aus einem halbkreisförmigen Segment besteht, welcher mehrere, insbesondere drei, Magnetträger (22) mit Permanentmagneten (36), vorzugsweise um jeweils 45 Grad, gegeneinander verdreht in einer drehfesten Position innerhalb einer Kassette (2, 3) hält.

29. Vorrichtung nach einem oder mehreren der Ansprüche 1-28,
dadurch gekennzeichnet,
daß die Permanentmagnete (36) durch Klemm- oder Druckkräfte in den Magnetträgern (22) gehalten sind.

30. Vorrichtung nach einem oder mehreren der Ansprüche 1-29,
dadurch gekennzeichnet,
daß die Permanentmagnete (36) mit ihren Polen einen Abstand von wenigen Millimetern oder keinen Abstand zum Trägerkörper (35) aufweisen.

31. Vorrichtung nach einem oder mehreren der Ansprüche 1-30,
dadurch gekennzeichnet,
daß die Magnetträger (22) in Längsrichtung des Trägerkörpers (35) angeordnet und vollständig oder nur teilweise bestückt sind.

32. Vorrichtung nach einem oder mehreren der Ansprüche 1-31,
dadurch gekennzeichnet,
daß die Magnetträger (22) in Längsrichtung des Trägerkörpers (35) angeordnet und wechselweise bei zwei Magnetträgern (22) oder alternierend bei mehreren Magnetträgern (22) bestückt sind.

## Claims

1. A device, in particular for magnetic fluid treatment, having at least one multipart housing (1) which can be mounted on a support body (35) whereby the housing (1) extends at least partly around the external periphery of the support body (35) and comprises at least one permanent magnet (36),
characterised in that
the housing (1) is constructed in such a way that it accommodates at least one adaptor element (20) which is equipped with a freely selectable number and arrangement of permanent magnets (36) in the axial and/or circumferential direction of the support body (35) whereby within the housing (1) the permanent magnets (36) are arranged in a fixed position and rotatable in respect of each other.

2. A device according to claim 1,
characterised in that
the adaptor elements (20) are provided for holding permanent magnets (36) of the same and/or different dimensions which can be arbitrarily selected, and subsequently changed, with regard to the magnet material, the pole position, the pole orientation and the pole number per magnet.

3. A device according to claim 1 or 2,
characterised in that
several housings (1) are arranged one behind the other on the support body (35).

4. A device according to claim 3,
characterised in that
the housings (1) are variously fitted with the same or different permanent magnets (36).

5. A device according to claim 3,
characterised in that
the housings (1) are arranged on the support body (35) fixed in position but rotatable or fixed in position and non-rotatable.

6. A device according to claim 5,
characterised in that
the housings (1) are variously held at the end faces in a non-rotatable position, for example by grove/spring or projection/recess combinations.

7. A device according to claim 5,
characterised in that
the housings (1) are axially fastened to the support body (35) by tubular sections, by spacer pins which engage bores or notches in the housings (1) or by bushings with sufficiently large external diameter.

8. A device according to claim 5,
characterised in that
for accurate positioning of the housing (1), the support body (35) is divided into sections, for example by rings, by tube sections or half-tube sections (131), which are connected to the support body (35) by press fitting, by welding, adhesive bonding, soldering, fixing screws or springs.

9. A device according to claim 8,
characterised in that
the rings, tube sections or half tube sections (131) comprise one or several hook-shaped connections (133) which engage the housing or housings (1) on both sides.

10. A device according to one or several of claims 1 - 9,
characterised in that
the support body (35) is a tube or a conduit of a piping system.

11. A device according to one or several of claims 1 - 10,
characterised in that
the support body (35) is a component of the device.

12. A device according to one or several of claims 1 - 11,
characterised in that
the support body (35) divides the fluid stream into several, in particular two, partial streams.

13. A device according to one or several of claims 1 - 12,
characterised in that
the support body (35) is made from a non-magnetic material, for example from brass, copper or special steel, in particular from a stable plastic which can be used in the field of foodstuffs.

14. A device according to one or several of claims 1 - 13,
characterised in that
the support body (35), at least in the area where it holds the housing (1) has a straight shape, and at the end comprises straight or curved conventional connection elements, for example flange connections (148), screw connections (141) or solder connections or it can be connected by means of union nuts, threaded joints or clamping flange connectors.

15. A device according to one or several of claims 1 - 13,
characterised in that
several housings (1) are arranged one behind the other on the support body (35) in one or more partial streams.

16. A device according to one or several of claims 1 - 15,
characterised in that
the housing (1) comprises a two-part half-shell (2, 3) with a cavity (5) for the support body (35) whereby one half-shell (2, 3) is provided with a cover plate (42) or two half shells (2,3) are combined with each other.

17. A device according to claim 16,
characterised in that
the housing (1) comprising a two-part half-shell (2, 3) is of different length and basic shape with a round, oval or angular, in particular tetragonal, octagonal or polygonal cross section in the case of two opposite half-shells (2, 3).

18. A device according to one or several of claims 1 - 17,
characterised in that
the half-shells (2, 3) are designed almost with mirror symmetry and in that the half-shells (2, 3) are held by hooks (8) which engage a corresponding groove (7) in the opposite half-shell (2, 3) or in that a screw-, rivet-, clamp-, adhesive-, band- or weld-connection is provided for connecting the two half-shells (2, 3).

19. A device according to one or several of claims 1 - 18,
characterised in that
in order to generate the magnetic field, permanent magnets (36) of variable size with regard to diameter or length and width as well as height are provided in block, bar, disk or rod shape.

20. A device according to one or several of claims 1 - 19,
characterised in that
the permanent magnets (36) have curved pole faces (43) on the side facing the support body (35).

21. A device according to one or several of claims 1 - 20,
characterised in that
the permanent magnets (36) consist of weak magnets or high-powered magnets.

22. A device according to one or several of claims 1 - 21,
characterised in that
the permanent magnets (36), on the outer surfaces, have a different pole strength, pole structure, i.e. pole number, pole size and pole position.

23. A device according to one or several of claims 1 - 22,
characterised in that
the adaptor element (20) comprises grooves, bores or cavities (34) for holding the permanent magnets (36).

24. A device according to one or several of claims 1 - 23,
characterised in that
the adaptor element (20) is held in grooves, bores or cavities of the housing (1) or in the half-shells (2, 3), in particular so that it can be clamped in or otherwise connected to the housing (1) or the half-shells (2, 3), for example by adhesive bonding.

25. A device according to one or several of claims 1 - 24,
characterised in that
the adaptor elements (20) are designed in at least two parts, with a magnet support (22) for holding the permanent magnets (36) and an orientation retainer (21) for non-rotatable positioning of the magnet support (22) in the half-shells (2, 3) of the housing (1).

26. A device according to claim 25,
characterised in that
the magnet support (22) is designed in two parts with a first part (101) with grooves, bores or cavities (104) for holding the permanent magnets (36), and a second part (103) with a plane face onto which the first part (101) can be bonded with adhesive, and two webs (105, 106) for depth balancing between the housing (1) and the support body (35).

27. A device according to claim 25 or 26,
characterised in that
the second part (103) and the orientation retainer (21) are designed in one piece.

28. A device according to claim 25 or 26,
characterised in that
the orientation retainer (21) comprises a semicircular segment which holds several, in particular three, magnet supports (22) with permanent magnets (36), preferably in each case rotated through 45 degrees in respect of each other, in a non-rotatable position inside a half shell (2, 3).

29. A device according to one or several of claims 1 - 28,
characterised in that
the permanent magnets (36) are held in the magnet supports (22) by clamping forces or pressure forces.

30. A device according to one or several of claims 1 - 29,
characterised in that
the distance between the poles of the permanent magnets (36) and the support body (35) is a few millimetres or zero.

31. A device according to one or several of claims 1 - 30,
characterised in that
the magnet supports (22) are arranged in longitudinal direction of the support body (35), and either all of the magnet supports (22) or only some of them are supporting magnets.

32. A device according to one or several of claims 1 - 31,
characterised in that
the magnet supports (22) are arranged in longitudinal direction of the support body (35) and are fitted alternately in the case of two magnet supports (22), or are fitted alternatingly in the case of several magnet supports (22).

## Revendications

1. Dispositif, notamment pour la préparation magnétique d'un fluide, avec au moins un boîtier (1) comprenant plusieurs parties et pouvant être monté sur un corps de support (35) sur la circonférence extérieure duquel il s'étend tout au moins en partie et présentant au moins un aimant permanent (36),
caractérisé en ce
que le boîtier est formé de manière à loger au moins un élément adaptateur (20), lequel est garni d'une quantité et d'une disposition optionnelles d'aimants permanents (36) dans le sens axial et/ou circonférentiel du corps de support (35), les aimants permanents étant maintenus résistants à la torsion et stationnaires à l'intérieur du boîtier (1).

2. Dispositif selon la revendication 1,
caractérisé en ce
que les éléments adaptateurs (20) sont prévus de manière à loger des aimants permanents (36) de môme grosseur et/ou de grosseur différente, pour lesquels il n'existe pas de contraintes de sélection concernant le matériau magnétique, le lieu des pôles, l'orientation polaire et le nombre de pôles par aimant, ces aimants pouvant être changés ultérieurement.

3. Dispositif selon la revendication 1 ou 2,
caractérisé en ce
que plusieurs boîtiers (1) sont disposés les uns derrière les autres sur le corps de support (35).

4. Dispositif selon la revendication 3,
caractérisé en ce
que les boîtiers sont garnis d'aimants permanents (36) semblables ou différents.

5. Dispositif selon la revendication 3,
caractérisé en ce
que les boîtiers (1) sont disposés stationnaires, mais déformables ou stationnaires et résistants à la torsion sur le corps de support (35).

6. Dispositif selon la revendication 5,
caractérisé en ce
que les boîtiers (1) sont maintenus résistants à la torsion sur leurs surfaces frontales, par exemple au moyen de combinaisons à double emboîtement mâle-femelle ou à emboîtement pour insertion de caoutchouc.

7. Dispositif selon la revendication 5,
caractérisé en ce
que les boîtiers (1) sont fixés axialement sur le corps de support (35) au moyen de segments de tube, de chevilles d'écartement, lesquels mordent dans des alésages ou des encoches du boîtier (1), ou au moyen de manchons d'accouplement présentant un diamètre extérieur suffisant.

8. Dispositif selon la revendication 5,
caractérisé en ce
que, pour un positionnement exact du boîtier (1), le corps de support (35) est subdivisé en sections, par exemple au moyen de bagues, segments de tube ou segments de demi-tube (131), lesquels sont raccordés au corps de support (35) par ajustage serré, soudage, collage, brasage, vissage d'arrêt ou suspension sur ressorts.

9. Dispositif selon la revendication 8,
caractérisé en ce
que les bagues, segments de tube ou de demi-tube (131) présentent une ou plusieurs pattes (133) en forme de crochet qui mordent des deux côtés dans le ou les boîtiers (1).

10. Dispositif selon l'une ou plusieurs des revendications 1 à 9,
caractérisé en ce
que le corps de support (35) est un tube ou un conduit d'un système de canalisation.

11. Dispositif selon l'une ou plusieurs des revendications 1 à 10,
caractérisé en ce
que le corps de support (35) fait partie intégrante du dispositif.

12. Dispositif selon l'une ou plusieurs des revendications 1 à 11,
caractérisé en ce
que le corps de support (35) répartit le flux du fluide en plusieurs, notamment deux flux partiels.

13. Dispositif selon l'une ou plusieurs des revendications 1 à 12,
caractérisé en ce
que le corps de support (35) est réalisé dans un matériau non magnétique tel que le laiton, le cuivre ou un acier spécial, notamment dans une matière plastique résistante et compatible avec les denrées alimentaires.

14. Dispositif selon l'une ou plusieurs des revendications 1 à 13,
caractérisé en ce
que le corps de support (35) est de forme droite au moins dans la zone de logement des boîtiers et équipé à ses extrémités d'éléments d'assemblage traditionnels droits ou recourbés tels que des brides (148), des vis (141) ou des connexions brasées, ou peut être raccordé au moyen d'écrous-raccords, de raccords à vis ou de raccords par brides à griffes.

15. Dispositif selon l'une ou plusieurs des revendications 1 à 13,
caractérisé en ce
que plusieurs boîtiers (1) sont disposés les uns derrière les autres sur le corps de support (35) dans un ou plusieurs flux partiels.

16. Dispositif selon l'une ou plusieurs des revendications 1 à 15,
caractérisé en ce
que le boîtier (1) se compose d'une cassette (2, 3) en deux parties avec un évidement (5) pour le corps de support (35), une cassette (2, 3) étant pourvue d'une plaque de recouvrement (42) ou deux cassettes (2, 3) étant respectivement combinées l'une avec l'autre.

17. Dispositif selon la revendication 16,
caractérisé en ce
que le boîtier (1) composé d'une cassette (2, 3) en deux parties présente une longueur différente et une forme fondamentale avec une section ronde, ovale, angulaire ou notamment quadrangulaire, octogonale ou polygonale pour deux cassettes (2, 3) se faisant face.

18. Dispositif selon l'une ou plusieurs des revendications 1 à 17,
caractérisé en ce
que les cassettes (2, 3) sont construites en quasi-symétrie spéculaire et en ce qu'elles sont maintenues par des crochets (8) prenant l'encoche dans la gorge (7) correspondante de la cassette opposée ou en ce qu'on prévoit un assemblage par vis, rivé, une connexion à ressort, un assemblage collé, par bandages ou un joint soudé pour assembler les deux cassettes (2, 3).

19. Dispositif selon l'une ou plusieurs des revendications 1 à 18,
caractérisé en ce
qu'on prévoit, pour la génération du champ magnétique, des aimants permanents (36) en bloc, bâton, disque ou barre dont les dimensions sont variables en ce qui concerne le diamètre ou les longueur et largeur ainsi que la hauteur.

20. Dispositif selon l'une ou plusieurs des revendications 1 à 19,
caractérisé en ce
que les aimants permanents (36) présentent des faces polaires (43) curvilignes sur leur côté tourné vers le corps de support (35).

21. Dispositif selon l'une ou plusieurs des revendications 1 à 20,
caractérisé en ce
que les aimants permanents (36) sont des aimants faibles ou des aimants à haute intensité.

22. Dispositif selon l'une ou plusieurs des revendications 1 à 21,
caractérisé en ce
que les aimants permanents (36) présentent sur leurs surfaces extérieures une intensité de pôle, une structure polaire, en d'autres termes un nombre de pôles, une grandeur de pôle et un lieu des pôles différents.

23. Dispositif selon l'une ou plusieurs des revendications 1 à 22,
caractérisé en ce
que l'élément adaptateur (20) présentent des gorges, alésages ou évidements (34) pour loger l'aimant permanent (36).

24. Dispositif selon l'une ou plusieurs des revendications 1 à 23,
caractérisé en ce
que l'élément adaptateur (20) est logé, notamment de façon à pouvoir être serré, dans des gorges, alésages ou évidements du boîtier (1) ou des cassettes (2, 3) ou est relié d'une autre manière, par exemple par collage, au boîtier (1) ou aux cassettes (2, 3).

25. Dispositif selon l'une ou plusieurs des revendications 1 à 24,
caractérisé en ce
que les éléments adaptateurs (20) se composent d'au moins deux parties, avec un support d'aimant (22) destiné à recevoir les aimants permanents (36) et un appui d'orientation (21) qui garantit le positionnement résistant à la torsion du support d'aimants (22) dans les cassettes (2, 3) du boîtier (1).

26. Dispositif selon la revendication 25,
caractérisé en ce
que le support d'aimants(22) se compose de deux parties, une première partie (101) pourvue des gorges, alésages ou évidements (104) pour le logement des aimants permanents (36) et une seconde partie (103) présentant une surface plane destinée au collage de la première partie (101) et deux entretoises (105, 106) pour compenser les différences de profondeur entre le boîtier (1) et le corps de support (35).

27. Dispositif selon la revendication 25 ou 26,
caractérisé en ce
que la seconde partie (103) et l'appui d'orientation (21) sont construits de façon monobloc.

28. Dispositif selon la revendication 25 ou 26,
caractérisé en ce
que l'appui d'orientation (21) est composé d'un segment en demi-cercle qui maintient de travers les uns par rapport aux autres et de préférence à 45° plusieurs, de préférence trois supports d'aimant (22) avec des aimants permanents (36), et ce à l'intérieur d'une cassette (2, 3) et dans une position de résistance en torsion.

29. Dispositif selon l'une ou plusieurs des revendications 1 à 28,
caractérisé en ce
que les aimants permanents (36) sont maintenus dans les supports d'aimant (22) sous l'effet d'efforts de serrage ou de pression.

30. Dispositif selon l'une ou plusieurs des revendications 1 à 29,
caractérisé en ce
qu'à la hauteur de leurs pôles, les aimants permanents (36) sont à une distance du corps de support (35), qui est nulle ou égale à quelques millimètres.

31. Dispositif selon l'une ou plusieurs des revendications 1 à 30,
caractérisé en ce
que les supports d'aimants (22) sont disposés dans le sens longitudinal du corps de support (35) et garnis intégralement ou seulement partiellement.

32. Dispositif selon l'une ou plusieurs des revendications 1 à 31,
caractérisé en ce
que les supports d'aimants (22) sont disposés dans le sens longitudinal du corps de support (35) et sont garnis en alternance s'ils sont deux ou à tour de rôle s'il sont plusieurs.
